(19) Europäisches Patentamt
European Patent Office
Office européen des brevets

(11) EP 4 366 020 A1

(12) EUROPEAN PATENT APPLICATION

(43) Date of publication:
08.05.2024 Bulletin 2024/19

(21) Application number: 23164924.5

(22) Date of filing: 29.03.2023

(51) International Patent Classification (IPC):
$H01M\ 10/0562^{(2010.01)}$   $H01M\ 4/62^{(2006.01)}$
$H01M\ 10/052^{(2010.01)}$   $H01M\ 10/0525^{(2010.01)}$
$C04B\ 35/515^{(2006.01)}$

(52) Cooperative Patent Classification (CPC):
H01M 10/0562; C01G 51/00; C04B 35/5152;
C04B 35/6261; H01B 1/06; H01M 4/62;
H01M 10/052; H01M 10/0525; C04B 2235/3201;
C04B 2235/3203; C04B 2235/3224;
C04B 2235/3225; C04B 2235/3244;
C04B 2235/3251; C04B 2235/3291;    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.11.2022 KR 20220143814

(71) Applicant: Samsung SDI Co., Ltd.
Yongin-si, Gyeonggi-do 17084 (KR)

(72) Inventors:
• CHOI, Wonsung
16678 Suwon-si (KR)
• KU, Junhwan
16678 Suwon-si (KR)

(74) Representative: Elkington and Fife LLP
Prospect House
8 Pembroke Road
Sevenoaks, Kent TN13 1XR (GB)

Remarks:
Amended claims in accordance with Rule 137(2)
EPC.

(54) **SOLID-STATE ELECTROLYTE, LITHIUM BATTERY COMPRISING SOLID-STATE ELECTROLYTE, AND PREPARATION METHOD OF SOLID-STATE ELECTROLYTE**

(57) A solid-state electrolyte including: a compound represented by Formula 1

Formula 1

$$Li_{p-q-(\alpha-5)\times r+(\beta-1)\times t}M1_q M2_{1-r}M3^{\alpha}_r X1_{s-t}X2^{\beta}_t$$

wherein, in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$ and $0< q/s \leq 0.02$,
M1 is a monovalent cation and is an element of Group 1 or Group 11 of the Periodic Table, or a combination thereof,
M2 is a pentavalent cation and is an element of Group 5 of the Periodic Table,
M3 is a cation element having a valency of $\alpha$,
X1 is a monovalent anion and is an element of Group 17 of the Periodic Table, and
X2 is an anion having a valency of $\beta$, and
wherein the compound is amorphous.

FIG. 6

(52) Cooperative Patent Classification (CPC): (Cont.)
C04B 2235/447; H01M 2300/008

**Description**

FIELD OF THE INVENTION

The disclosure relates to a solid-state electrolyte, a lithium battery including the same, and a method of preparing a solid-state electrolyte.

BACKGROUND OF THE INVENTION

Lithium batteries may provide improved specific energy (watt hours per kilogram (Wh/kg)) and/or energy density (watt. hours per cubic centimeter (Wh/cm$^3$)).
A lithium battery may include a solid-state electrolyte for improved stability. Solid-state electrolytes have decreased stability at a high voltage or have lower ion conductivity than liquid electrolytes. Thus, there remains a need for an improved solid-state electrolyte.

SUMMARY OF THE INVENTION

Sulfide-based (i.e., sulfide) solid-state electrolytes provide good ion conductivity and have mechanical malleability such as ductility, but have safety issues such as hydrogen sulfide ($H_2S$) gas emission. Oxide-based (i.e., oxide) solid-state electrolytes provide satisfactory ion conductivity, but require a high temperature of 1,000 °C or greater to be manufactured, and lack mechanical flexibility such as ductility. In this context, there is a demand for a solid-state electrolyte that has improved ion conductivity and mechanical ductility, and can be manufactured at a relatively lower temperature.
Provided is a novel solid-state electrolyte.
Provided is a lithium battery including the solid-state electrolyte.
Provided is a method of preparing the solid-state electrolyte.
Additional aspects will be set forth in part in the description which follows and, in part, will be apparent from the description, or may be learned by practice of the presented embodiments of the disclosure.
According to an aspect of the disclosure,

a solid-state electrolyte includes: a compound represented by Formula 1

$$\text{Formula 1} \qquad \text{Li}_{p-q-(\alpha-5)\times r+(\beta-1)\times t}\text{M1}_q\text{M2}_{1-r}\text{M3}^{\alpha}_r\text{X1}_{s-t}\text{X2}^{\beta}_t$$

wherein in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$ and $0< q/s \leq 0.02$,
M1 is a monovalent cation and is an element of Group 1 or Group 11 of the Periodic Table, or a combination thereof,
M2 is a pentavalent cation and is at least one element of Group 5 of the Periodic Table,
M3 is a cation element having a valency of $\alpha$,
X1 is a monovalent anion and is at least one element of Group 17 of the Periodic Table, and
X2 is an anion having a valency of $\beta$, and
wherein the compound is amorphous.

According to another aspect of the disclosure,

the solid-state electrolyte includes a compound represented by Formula 1a

$$\text{Formula 1a} \qquad \text{Li}_a\text{M1}_b\text{M2}_c\text{M3}_d\text{X1}_e\text{X2}_f$$

wherein in Formula 1a, $0<a\leq7$, $0<b\leq0.24$, $0<c\leq1$, $0\leq d<0.5$, $1<e\leq12$, $0\leq f\leq1$, and $0< b/(e+f) \leq 0.02$,
M1 may be a monovalent cation and is an element of Group 1 or Group 11 of the Periodic Table, or a combination thereof,
M2 may be a pentavalent cation and is at least one element of Group 5 of the Periodic Table,
M3 may be a divalent cation element, a trivalent cation element, a tetravalent cation element, a pentavalent cation element, a hexavalent cation element, or a combination thereof,
X1 is a monovalent anion and is at least one element of Group 17 of the Periodic Table, and
X2 is a monovalent anion, a divalent anion, a trivalent anion, or a combination thereof.

According to another aspect of the disclosure,

a lithium battery includes a cathode layer; an anode layer; and an electrolyte layer between the cathode layer and the anode layer,

wherein the cathode layer, the electrolyte layer, or a combination thereof, includes the above-described solid-state electrolyte.

According to another aspect of the disclosure,

a method of preparing a solid-state electrolyte includes: mechanochemically contacting a lithium precursor, an M1 precursor, an M2 precursor, and an X1 precursor, at a temperature of about 300 °C or less,

wherein the mixture further optionally includes an M3 precursor, an X2 precursor, or a combination thereof,

to prepare a compound represented by Formula 1, wherein the compound represented by Formula 1 is amorphous

Formula 1          $Li_{p-q-(\alpha-5)\times r+(\beta-1)\times t}M1_q M2_{1-r}M3^{\alpha}_r X1_{s-t}X2^{\beta}_t$

In Formula 1, $0<p\leq7$, $0<q\leq0.24$, $0\leq r\leq0.5$, $1\leq s\leq12$, $0\leq t\leq1$, $0<p-q-(\alpha-5)\times r+(\beta-1)\times t$ and $0< q/s \leq 0.02$,

M1 is a monovalent cation and is an element of Group 1 or Group 11 of the Periodic Table, or a combination thereof,

M2 is a pentavalent cation and is at least one element of Group 5 of the Periodic Table,

M3 is a cation element having a valency of $\alpha$,

X1 is a monovalent anion and is at least one element of Group 17 of the Periodic Table, and

X2 is an anion having a valency of $\beta$

to prepare the solid-state electrolyte.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a graph of intensity (arbitrary units, a.u.) vs. diffraction angle (°2θ) and shows the results of X-ray diffraction analysis of solid-state electrolytes prepared in Example 1 and Comparative Example 1;

FIG. 2A is a graph of intensity (a.u.) vs. binding energy (electronvolts, eV) and shows the results of X-ray photoelectron spectroscopy (XPS) analysis of a Ta 4f orbital of the solid-state electrolyte prepared in Example 3.

FIG. 2B is a graph of intensity (a.u.) vs. binding energy (eV) and shows the results of XPS analysis of a Cl 2p orbital of the solid-state electrolyte prepared in Example 3.

FIG. 3 is a graph of ion conductivity (Siemens per centimeter, $S\cdot cm^{-1}$) vs. x in $Li_{1-x}Na_x TaCl_6$ showing ion conductivity measurements of solid-state electrolytes prepared in Comparative Example 1, Examples 1 to 5, and Comparative Example 4.

FIG. 4 is a graph of conductivity ($S\cdot cm^{-1}$) vs. 1000/temperature (T) (inverse Kelvin, $K^{-1}$) showing Arrhenius plots of the solid-state electrolytes prepared in Comparative Example 1 and Examples 1 to 4.

FIG. 5 is a graph of specific capacity (milliampere. hours per gram, $mAh\cdot g^{-1}$) vs. number of cycles, showing the results of charge-discharge capacities according to charge-discharge cycles of solid-state secondary batteries of Example 10 and Comparative Example 6.

FIG. 6 is a schematic diagram of an embodiment of a structure of a lithium ion battery;

FIG. 7 schematic diagram of an embodiment of a structure of a lithium ion battery;

FIG. 8 schematic diagram of an embodiment of a structure of a lithium ion battery;

FIG. 9 schematic diagram of an embodiment of a structure of a solid-state battery;

FIG. 10 schematic diagram of an embodiment of a structure of a solid-state battery;

FIG. 11 schematic diagram of an embodiment of a structure of a solid-state battery;

FIG. 12 schematic diagram of an embodiment of a structure of a multilayer ceramic battery;

FIG. 13 schematic diagram of an embodiment of a structure of a multilayer ceramic battery; and

FIG. 14 schematic diagram of an embodiment of a structure of a multilayer ceramic battery.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. Expressions such as "at least one of," when preceding a list of elements, modify the entire list of elements and do not modify the individual elements of the list.

The present inventive concept, whi"h wi'l be more fully described hereinafter, may have various variations and various embodiments, and specific embodiments will be illustrated in the accompanied drawings and described in greater details. However, the present inventive concept should not be construed as being limited to specific embodiments set forth herein. Rather, these embodiments are to be understood as encompassing all variations, equivalents, or alternatives included in the scope of the present inventive concept.

The terminology used hereinbelow Is used for the purpose of describing particular embodiments only and is not intended to limit the present inventive concept. As used herein, the singular forms are intended to include the plural forms as well, unless the context clearly indicates otherwise. As used herein, the terms "comprises" and/or "comprising," or "includes" and/or "including" when used in this specification, specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein,"""" may be interpreted as""an"", or as""o"" depending on the context.

In the drawings, the thicknesses of layers and regions may be exaggerated for clarity of description. Like reference numerals denote like elements throughout the specification. When a component, such as a layer, a film, a region, or a plate, is described as being "above" or "on" another component, the component may be directly above the another component, or there may be yet another component therebetween. It will be understood that although the terms "first," "second," etc. may be used herein to describe various elements, components, regions, layers and/or sections, these elements, components, regions, layers and/or sections, these elements components, regions, layers and/or sections, these elements, components, regions, layers and/or sections should not be limited by these terms. These terms are only used to distinguish one element components, regions, layers and/or sections, these elements, components, regions, layers and/or sections from another element components, regions, layers and/or sections, these elements, components, regions, layers and/or sections. Thus, "a first element," "component," "region," "layer" or "section" discussed below could be termed a second element, component, region, layer or section without departing from the teachings herein.

Furthermore, relative terms, such as "lower" or "bottom" and "upper" or "top," may be used herein to describe one elemen"s relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below. ""Abou"" or""approximatel"" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example,""abou"" can mean within one or more standard deviations, or within $\pm$ 30%, 20%, 10% or 5% of the stated value. Endpoints of ranges may each be independently selected.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

As used herein, the term "metal" refers to both metals and metalloids such as silicon and germanium, in an elemental or ionic state.

As used herein, the term "alloy" means a mixture of two or more metals.

As used herein, the term""cathode active material" refers to a cathode material capable of undergoing lithiation and delithiation.

As used herein, the term""anode active material" refers to an anode material capable of undergoing lithiation and delithiation.

As used herein, the terms""lithiatio"" and""to lithiat"" refer to a process of adding lithium to a cathode active material or an anode active material.

As used herein, the terms""delithiatio"" and""to delithiat"" refer to a process of removing lithium from a cathode active material or an anode active material.

As used herein, the terms "charging" and "charg"" refer to a process of providing electrochemical energy to a battery.

As used herein, the terms "discharging" and "discharg"" refer to a process of removing electrochemical energy from a battery.

As used herein, the terms""positive electrod"" and""cathod"" refer to an electrode at which electrochemical reduction and lithiation take place during the discharging process.

As used herein, the terms""negative electrod"" and""anod"" refer to an electrode at which electrochemical reduction and delithiation take place during the discharging process.

In the present application, the term ""particle diamete"" of a particle refers to an average particle diameter if the particle is spherical, and for a particle that is non-spherical, said term refers to an average major axis length of the particle. The particle diameter of particles may be measured using a particle size analyzer (PSA). "Particle diameter" of particles may be, for example, an average diameter of the particles. The average particle diameter refers to a median particle diameter (D50) unless explicitly stated otherwise. The median particle diameter (D50) refers to a particle size corresponding to a cumulative volume of 50 volume percent (vol%) counted from the smallest particle size on a particle size distribution curve in which particles are accumulated from the smallest particle size to the largest particle size. The cumulative value may be, for example, cumulative volume. The median particle diameter may be measured by, for example, a laser diffraction method.

Hereinafter, a solid-state electrolyte according to an embodiment, a lithium battery including the same, and a method of preparing a solid-state electrolyte will be described in greater detail.

SOLID-STATE ELECTROLYTE

A solid-state electrolyte according to an embodiment may include a compound represented by Formula 1

$$\text{Formula 1} \qquad \text{Li}_{p-q-(\alpha-5)\times r+(\beta-1)\times t}\text{M1}_q\text{M2}_{1-r}\text{M3}^\alpha_r\text{X1}_{s-t}\text{X2}^\beta_t$$

wherein in Formula 1, $0<p\leq7$, $0<q\leq0.24$, $0\leq r\leq0.5$, $1<s\leq12$, $0\leq t\leq1$, $0<p-q-(a-5)xr+(13-1)\times t$ and $0< q/s \leq 0.02$,

M1 is a monovalent cation and is an element of Group 1 or Group 11 of the Periodic Table, or a combination thereof,

M2 is a pentavalent cation and is at least one of Group 5 of the Periodic Table,

M3 is a cation element having a valency of $\alpha$,

X1 is a monovalent anion and is an element of Group 17 of the Periodic Table, and

X2 is an anion having a valency of $\beta$, and

wherein the compound is amorphous.

In Formula 1, for example, $0<p\leq7$, $0<p\leq6$, $0<p\leq5$, $0<p\leq4$, $0<p\leq3$, $0<p\leq2$, or $0<p\leq7$. In Formula 1, for example, $1<s\leq12$, $1<s\leq11$, $1<s\leq10$, $1<s\leq9$, $1<s\leq8$, $1<s\leq7$, or $1<s\leq6$. In Formula 1, for example, $0.001< q/s \leq 0.02$, $0.001< q/s \leq 0.18$, or $0.001< q/s \leq 0.17$.

By including a compound represented by Formula 1, the solid-state electrolyte may provide improved ion conductivity. The solid-state electrolyte may be amorphous. The solid-state electrolyte including the compound represented by Formula 1 due to generating no harmful gases during the manufacturing process and charging/discharging processes, may provide improved safety. The solid-state electrolyte including the compound represented by Formula 1 may be prepared in a dry process at a relatively low temperature of about 300 °C or less, and thus may be convenient and inexpensive to prepare. The solid-state electrolyte comprising the compound represented by Formula 1 due to having a wider window of electric potential than that of a sulfide-based solid-state electrolyte, may be suitable for use in a lithium battery. The solid-state electrolyte comprising the compound represented by Formula 1 due to having an increased mechanical malleability compared to an oxide-based solid-state electrolyte, may be easily molded in various shapes and may effectively accommodate volume changes of a secondary battery during charging/discharging.

A structure of the compound represented by Formula 1 may include, for example, a Li site, an M2 site, and an X1 site that are three-dimensionally arranged. The three-dimensionally arranged Li site, M2 site, and X1 site may form a polyhedral structure, for example, such as a tetrahedral structure, a hexagonal structure, or an octahedral structure. For example, one or more Li sites and one or more X1 sites may be arranged adjacent to the M2 site to form a polyhedral structure. The polyhedral structure may be, for example, randomly arranged in the solid-state electrolyte, while maintaining a three-dimensional arrangement of the Li site, M2 site, and X1 site within the polyhedral structure.

The compound represented by Formula 1 may include, for example, the Li site, wherein the Li site may include M1 disposed therein. For example, in the compound represented by Formula 1, M1 may be substituted in a portion of the Li site. A content of M1 included in the Li site may be about 15 mole percent (mol%) or less, about 10 mol% or less, or about 5 mol% or less, with respect to a total Li content. The content of M1 included in the Li site may be about 1 mol% to about 15 mol%, about 1 mol% to about 10 mol%, about 1 mol% to about 5 mol%, or about 2 mol% to about 5 mol%, with respect to the total Li content.

In the compound represented by Formula 1, M1 may include, for example, Na, K, Rb, Cs, Ag, Cu, or a combination thereof. As M1 includes such a metal, the solid-state electrolyte may provide improved ion conductivity.

In the compound represented by Formula 1, M2 may include, for example, Ta, V, Nb, or a combination thereof. As M2 includes such a metal, the solid-state electrolyte may provide improved ion conductivity.

A structure of the compound represented by Formula 1 may include, for example, a Li site, an M2 site, and an X1 site that are three-dimensionally arranged. The compound represented by Formula 1 may include, for example, an M2 site, wherein the M2 site may include M3 having a valence of $\alpha$ (i.e., $M3^\circ$) disposed therein. For example, in the compound represented by Formula 1, $M3^\alpha$ may be substituted in a portion of the M2 site. A content of $M3^\circ$ included in the M2 site may be about 50 mol% or less, about 40 mol% or less, about 30 mol% or less, about 20 mol% or less, about 10 mol% or less, or about 5 mol% or less, with respect to a total M2 content. The content of $M3^\circ$ included in the M2 site may be about 0.01 mol% to about 50 mol%, about 0.05 mol% to about 40 mol%, about 0.1 mol% to about 30 mol%, about 0.1 mol% to about 20 mol%, about 0.1 mol% to about 10 mol%, or about 1 mol% to about 5 mol%, with respect to the total M2 content.

In the compound represented by Formula 1, $M3^\alpha$ may be, for example, a divalent cation element. In the compound represented by Formula 1, $M3^\alpha$ may include, for example, Be, Mg, Ca, Sr, Ba, Zn, Cu, Ni, Co, Fe, Mn, Cr, V, or a combination thereof. As $M3^\circ$ includes such a metal, the solid-state electrolyte may provide improved ion conductivity.

In the compound represented by Formula 1, $M3^\alpha$ may be, for example, a trivalent cation element. In the compound represented by Formula 1, $M3^\alpha$ may include, for example, Sc, Ho, Lu, Yb, Tb, Tm, Er, Dy, Er, In, Ga, Sm, Gd, B, Al, Ga, In, Y, La, Ce, Pr, Nd, or a combination thereof. As $M3^\alpha$ includes such a metal, the solid-state electrolyte may provide improved ion conductivity.

In the compound represented by Formula 1, $M3^\alpha$ may be, for example, a tetravalent cation element. In the compound represented by Formula 1, $M3^\alpha$ may include, for example, Zr, Hf, Ti, Ce, Si, Sn, Ge, Pb, or a combination thereof. As $M3^\circ$ includes such a metal, the solid-state electrolyte may provide improved ion conductivity.

In the compound represented by Formula 1, $M3^\alpha$ may be, for example, a pentavalent cation element. In the compound represented by Formula 1, $M3^\alpha$ may include, for example, Cr, Mn, Fe, Co, or a combination thereof. As $M3^\alpha$ includes such a metal, the solid-state electrolyte may provide improved ion conductivity.

In the compound represented by Formula 1, $M3^\alpha$ may be, for example, a hexavalent cation element. In the compound represented by Formula 1, $M3^\alpha$ may include, for example, Cr, Mo, W, Mn, or a combination thereof. As $M3^\alpha$ includes such a metal, the solid-state electrolyte may provide improved ion conductivity.

In the compound represented by Formula 1, X1 may include, for example, Cl, Br, F, I, or a combination thereof. As X1 includes such an element, the solid-state electrolyte may provide improved ion conductivity.

The structure of the compound represented by Formula 1 may include, for example, a Li site, an M2 site, and an X1 site that are three-dimensionally arranged. The compound represented by Formula 1 may include, for example, an X1 site, wherein the X1 site may include X2 having a valence of $\beta$ (i.e., $X2^\beta$) disposed therein. For example, in the compound represented by Formula 1, $X2^\circ$ may be substituted in a portion of the X1 site. A content of $X2^\beta$ included in the X1 site may be about 50 mol% or less, about 40 mol% or less, about 30 mol% or less, about 20 mol% or less, about 10 mol% or less, or about 5 mol% or less, with respect to a total X1 content. The content of $X2^\beta$ included in the X1 site may be about 0.01 mol% to about 50 mol%, about 0.05 mol% to about 40 mol%, about 0.1 mol% to about 30 mol%, about 0.1 mol% to about 20 mol%, about 0.1 mol% to about 10 mol%, or about 1 mol% to about 5 mol%, with respect to the total X1 content.

In the compound represented by Formula 1, $X2^\beta$ may be a monovalent anion. In the compound represented by Formula 1, $X2^\beta$ may include $BH_4$, $NO_2$, $NO_3$, CN, $ClO_3$, or a combination thereof. As $X2^\beta$ includes such an element, the solid-state electrolyte may provide improved ion conductivity.

In the compound represented by Formula 1, $X2^\beta$ may be a divalent anion. In the compound represented by Formula 1, $X2^\beta$ may include, for example, $SO_4$, $SO_3$, $CO_3$, or a combination thereof. As $X2^\beta$ includes such an element, the solid-state electrolyte may provide improved ion conductivity.

In the compound represented by Formula 1, $X2^\beta$ may be a trivalent anion. In the compound represented by Formula 1, $X2^\beta$ may include, for example, $PO_4$, $BO_3$, $AsO_4$, P, N, or a combination thereof. As $X2^\beta$ includes such an

element, the solid-state electrolyte may provide improved ion conductivity.

In the compound represented by Formula 1, for example, p may be an integer of 1 to 7, and s may be an integer of 6 to 12. In the compound represented by Formula 1, when p is 1, s is 6; when p is 2, s is 7; when p is 3, s is 8; when p is 4, s is 9; when p is 5, s is 10; when p is 6, s is 11; and when p is 7, s is 12.

The compound represented by Formula 1 may be, for example, a compound represented by Formula 2:

$$\text{Formula 2} \qquad \text{Li}_{p-q-(\alpha-5)\times r+(\beta-1)\times t}\text{M1}_q\text{M2}_{1-r}\text{M3}^\alpha_r\text{Cl}_{s-t}\text{X2}^\beta_t$$

wherein in Formula 2, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 may be Na, K, Rb, Cs, Ag, Cu, or a combination thereof,
M2 may be Ta, V, Nb, or a combination thereof,
M3 may be Sc, Ho, Lu, Yb, Tm, Er, Dy, In, Ga, Sm, Gd, B, Al, Ga, In, Y, La, Ce, Pr, Nd, or a combination thereof, and
X2 may be a monovalent anion, a divalent anion, a trivalent anion, or a combination thereof.

The compound represented by Formula 2 may be, for example, a compound represented by Formulas 2a to 2f:

$$\text{Formula 2a} \qquad \text{Li}_{1-q-(\alpha-5)\times r+(\beta-1)\times t}\text{M1}_q\text{M2}_{1-r}\text{M3}^\alpha_r\text{Cl}_{6-t}\text{X2}^\beta_t$$

wherein in Formula 2a, $0<q\leq0.24$, $0\leq r\leq0.5$, $0\leq t\leq1$, $0<q+(\alpha-5)\times r-(\beta-1)\times t$, and $0< q/6 \leq 0.02$,
M1 may be Na, K, Rb, Cs, Ag, Cu, or a combination thereof,
M2 may be Ta, V, Nb, or a combination thereof,
M3° may be Sc, Ho, Lu, Yb, Tm, Er, Dy, In, Ga, Sm, Gd, B, Al, Ga, In, Y, La, Ce, Pr, Nd, or a combination thereof, and
$\text{X2}^\beta$ may be a monovalent anion, a divalent anion, a trivalent anion, or a combination thereof;

$$\text{Formula 2b} \qquad \text{Li}_{2-q-(\alpha-5)\times r+(\beta-1)\times t}\text{M1}_q\text{M2}_{1-r}\text{M3}^\alpha_r\text{Cl}_{7-t}\text{X2}^\beta_t$$

wherein in Formula 2b, $0<q\leq0.24$, $0\leq r\leq0.5$, $0\leq t\leq1$, $0<q+(\alpha-5)\times r-(\beta-1)\times t$, and $0< q/7 \leq 0.02$,
M1 may be Na, K, Rb, Cs, Ag, Cu, or a combination thereof,
M2 may be Ta, V, Nb, or a combination thereof,
$\text{M3}^\alpha$ may be Sc, Ho, Lu, Yb, Tm, Er, Dy, In, Ga, Sm, Gd, B, Al, Ga, In, Y, La, Ce, Pr, Nd, or a combination thereof,
$\text{X2}^\beta$ may be a monovalent anion, a divalent anion, a trivalent anion, or a combination thereof;

$$\text{Formula 2c} \qquad \text{Li}_{3-q-(\alpha-5)\times r+(\beta-1)\times t}\text{M1}_q\text{M2}_{1-r}\text{M3}^\alpha_r\text{Cl}_{8-t}\text{X2}^\beta_t$$

wherein in Formula 2c, $0<q\leq0.24$, $0\leq r\leq0.5$, $0\leq t\leq1$, $0<q+(\alpha-5)\times r-(\beta-1)\times t$, and $0< q/8 \leq 0.02$,
M1 may be Na, K, Rb, Cs, Ag, Cu, or a combination thereof,
M2 may be Ta, V, Nb, or a combination thereof,
$\text{M3}^\alpha$ may be Sc, Ho, Lu, Yb, Tm, Er, Dy, In, Ga, Sm, Gd, B, Al, Ga, In, Y, La, Ce, Pr, Nd, or a combination thereof,
$\text{X2}^\beta$ may be a monovalent anion, a divalent anion, a trivalent anion, or a combination thereof;

$$\text{Formula 2d} \qquad \text{Li}_{4-q-(\alpha-5)\times r+(\beta-1)\times t}\text{M1}_q\text{M2}_{1-r}\text{M3}^\alpha_r\text{Cl}_{9-t}\text{X2}^\beta_t$$

wherein in Formula 2d, $0<q\leq0.24$, $0\leq r\leq0.5$, $0\leq t\leq1$, $0<q+(\alpha-5)\times r-(\beta-1)\times t$, and $0< q/9 \leq 0.02$,
M1 may be Na, K, Rb, Cs, Ag, Cu, or a combination thereof,
M2 may be Ta, V, Nb, or a combination thereof,
$\text{M3}^\alpha$ may be Sc, Ho, Lu, Yb, Tm, Er, Dy, In, Ga, Sm, Gd, B, Al, Ga, In, Y, La, Ce, Pr, Nd, or a combination thereof,
$\text{X2}^\beta$ may be a monovalent anion, a divalent anion, a trivalent anion, or a combination thereof;

$$\text{Formula 2e} \qquad \text{Li}_{5-q-(\alpha-5)\times r+(\beta-1)\times t}\text{M1}_q\text{M2}_{1-r}\text{M3}^\alpha_r\text{Cl}_{10-t}\text{X2}^\beta_t$$

wherein in Formula 2e, $0<q\leq0.24$, $0\leq r\leq0.5$, $0\leq t\leq1$, $0<q+(\alpha-5)\times r-(\beta-1)\times t$, and $0< q/10 \leq 0.02$,
M1 may be Na, K, Rb, Cs, Ag, Cu, or a combination thereof,
M2 may be Ta, V, Nb, or a combination thereof,
$\text{M3}^\alpha$ may be Sc, Ho, Lu, Yb, Tm, Er, Dy, In, Ga, Sm, Gd, B, Al, Ga, In, Y, La, Ce, Pr, Nd, or a combination thereof,
$\text{X2}^\beta$ may be a monovalent anion, a divalent anion, a trivalent anion, or a combination thereof;

Formula 2f $\qquad Li_{6-q-(\alpha-5)\times r+(\beta-1)\times t}M1_qM2_{1-r}M3^{\alpha}_rCl_{11-t}X2^{\beta}_t$

wherein in Formula 2f, $0<q\leq0.24$, $0\leq r\leq0.5$, $0\leq t\leq1$, $0<q+(\alpha-5)\times r-(\beta-1)\times t$, and $0< q/11 \leq 0.02$,
M1 may be Na, K, Rb, Cs, Ag, Cu, or a combination thereof,
M2 may be Ta, V, Nb, or a combination thereof,
M3° may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

Formula 2g $\qquad Li_{7-q-(\alpha-5)\times r+(\beta-1)\times t}M1_qM2_{1-r}M3^{\alpha}_rCl_{12-t}X2^{\beta}_t$

wherein in Formula 2g, $0<q\leq0.24$, $0\leq r\leq0.5$, $0\leq t\leq1$, $0<q+(\alpha-5)\times r-(\beta-1)\times t$, and $0< q/12 \leq 0.02$,
M1 may be Na, K, Rb, Cs, Ag, Cu, or a combination thereof,
M2 may be Ta, V, Nb, or a combination thereof,
M3$^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof.

The compound represented by Formula 1 may be, for example, a compound represented by Formula 3:

Formula 3 $\qquad Li_{p-q-(\alpha-5)\times r+(\beta-1)\times t}M1_qTa_{1-r}M3^{\alpha}_rCl_{s-t}X2^{\beta}_t$

wherein in Formula 3, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 may be Na, K, Rb, Cs, Ag, Cu, or a combination thereof,
M3$^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be $BH_4$, $NO_2$, $NO_3$, CN, $ClO_3$, $SO_4$, $SO_3$, $CO_3$, $PO_4$, $BO_3$, $AsO_4$, P, N, or a combination thereof.

In the compound represented by Formula 1, for example, p may be an integer of 1 to 7, and s may be an integer of 6 to 12.
The compound represented by Formula 3 may be, for example, a compound represented by Formulas 3a to 3g:

Formula 3a $\qquad Li_{1-q-(\alpha-5)\times r+(\beta-1)\times t}M1_qTa_{1-r}M3^{\alpha}_rCl_{6-t}X2^{\beta}_t$

wherein in Formula 3a, $0<q\leq0.24$, $0\leq r\leq0.5$, $0\leq t\leq1$, $0<q+(\alpha-5)\times r-(\beta-1)\times t$, and $0< q/6 \leq 0.02$,
M1 may be Na, K, Rb, Cs, Ag, Cu, or a combination thereof,
M3$^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

Formula 3b $\qquad Li_{2-q-(\alpha-5)\times r+(\beta-1)\times t}M1_qTa_{1-r}M3^{\alpha}_rCl_{7-t}X2^{\beta}_t$

wherein in Formula 3b, $0<q\leq0.24$, $0\leq r\leq0.5$, $0\leq t\leq1$, $0<q+(\alpha-5)\times r-(\beta-1)\times t$, and $0< q/7 \leq 0.02$,
M1 may be Na, K, Rb, Cs, Ag, Cu, or a combination thereof,
M3$^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

Formula 3c $\qquad Li_{3-q-(\alpha-5)\times r+(\beta-1)\times t}M1_qTa_{1-r}M3^{\alpha}_rCl_{8-t}X2^{\beta}_t$

wherein in Formula 3c, $0<q\leq0.24$, $0\leq r\leq0.5$, $0\leq t\leq1$, $0<q+(\alpha-5)\times r-(\beta-1)\times t$, and $0< q/8 \leq 0.02$,
M1 may be Na, K, Rb, Cs, Ag, Cu, or a combination thereof,
M3$^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

Formula 3d $\qquad Li_{4-q-(\alpha-5)\times r+(\beta-1)\times t}M1_qTa_{1-r}M3^{\alpha}_rCl_{9-t}X2^{\beta}_t$

wherein in Formula 3d, $0<q\leq0.24$, $0\leq r\leq0.5$, $0\leq t\leq1$, $0<q+(\alpha-5)\times r-(\beta-1)\times t$, and $0< q/9 \leq 0.02$,
M1 may be Na, K, Rb, Cs, Ag, Cu, or a combination thereof,
M3° may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

Formula 3e $\qquad$ $Li_{5-q-(\alpha-5)\times r+(\beta-1)\times t}M1_qTa_{1-r}M3^\alpha_rCl_{10-t}X2^\beta_t$

wherein in Formula 3e, $0<q\leq0.24$, $0\leq r\leq0.5$, $0\leq t\leq1$, $0<q+(\alpha-5)\times r-(\beta-1)\times t$, and $0< q/10 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof;

Formula 3f $\qquad$ $Li_{6-q-(\alpha-5)\times r+(\beta-1)\times t}M1_qTa_{1-r}M3^\alpha_rCl_{11-t}X2^\beta_t$

wherein in Formula 3f, $0<q\leq0.24$, $0\leq r\leq0.5$, $0\leq t\leq1$, $0<q+(\alpha-5)\times r-(\beta-1)\times t$, and $0< q/11 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof;

Formula 3g $\qquad$ $Li_{7-q-(\alpha-5)\times r+(\beta-1)\times t}M1_qTa_{1-r}M3^\alpha_rCl_{12-t}X2^\beta_t$

wherein in Formula 3g, $0<q\leq0.24$, $0\leq r\leq0.5$, $0\leq t\leq1$, $0<q+(\alpha-5)\times r-(\beta-1)\times t$, and $0< q/12 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof.

The compound represented by Formula 1 may be, for example, a compound represented by Formula 4:

Formula 4 $\qquad$ $Li_{p-q-(\alpha-5)\times r+(\beta-1)\times t}M1_qNb_{1-r}M3^\alpha_rCl_{s-t}X2^\beta_t$

wherein in Formula 4, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be $BH_4$, $NO_2$, $NO_3$, CN, $ClO_3$, $SO_4$, $SO_3$, $CO_3$, $PO_4$, $BO_3$, $AsO_4$, P, N, or a combination thereof.

The compound represented by Formula 4 may be, for example, a compound represented by Formulas 4a to 4g:

Formula 4a $\qquad$ $Li_{1-q-(\alpha-5)\times r+(\beta-1)\times t}M1_qNb_{1-r}M3^\alpha_rCl_{6-t}X2^\beta_t$

wherein in Formula 4a, $0<q\leq0.24$, $0\leq r\leq0.5$, $0\leq t\leq1$, $0<q+(\alpha-5)\times r-(\beta-1)\times t$, and $0< q/6 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof;

Formula 4b $\qquad$ $Li_{2-q-(\alpha-5)\times r+(\beta-1)\times t}M1_qNb_{1-r}M3^\alpha_rCl_{7-t}X2^\beta_t$

wherein in Formula 4b, $0<q\leq0.24$, $0\leq r\leq0.5$, $0\leq t\leq1$, $0<q+(\alpha-5)\times r-(\beta-1)\times t$, and $0< q/7 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof;

Formula 4c $\qquad$ $Li_{3-q-(\alpha-5)\times r+(\beta-1)\times t}M1_qNb_{1-r}M3^\alpha_rCl_{8-t}X2^\beta_t$

wherein in Formula 4c, $0<q\leq0.24$, $0\leq r\leq0.5$, $0\leq t\leq1$, $0<q+(\alpha-5)\times r-(\beta-1)\times t$, and $0< q/8 \leq 0.02$,
M1 may be Na, K, Rb, Cs, Ag, Cu, or a combination thereof,
M3$^\alpha$ may be Sc, Ho, Lu, Yb, Tm, Er, Dy, In, Ga, Sm, Gd, B, Al, Ga, In, Y, La, Ce, Pr, Nd, or a combination thereof,
X2$^\beta$ may be a monovalent anion, a divalent anion, a trivalent anion, or a combination thereof;

Formula 4d $\qquad$ $Li_{4-q-(\alpha-5)\times r+(\beta-1)\times t}M1_qNb_{1-r}M3^\alpha_rCl_{9-t}X2^\beta_t$

wherein in Formula 4d, $0<q\leq0.24$, $0\leq r\leq0.5$, $0\leq t\leq1$, $0<q+(\alpha-5)\times r-(\beta-1)\times t$, and $0< q/9 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof;

$$\text{Formula 4e} \qquad Li_{5-q-(\alpha-5)\times r+(\beta-1)\times t}M1_qNb_{1-r}M3^\alpha_rCl_{10-t}X2^\beta_t$$

wherein in Formula 4e, $0<q\leq0.24$, $0\leq r\leq0.5$, $0\leq t\leq1$, $0<q+(\alpha-5)\times r-(\beta-1)\times t$, and $0< q/10 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof;

$$\text{Formula 4d} \qquad Li_{6-q-(\alpha-5)\times r+(\beta-1)\times t}M1_qNb_{1-r}M3^\alpha_rCl_{11-t}X2^\beta_t$$

wherein in Formula 4f, $0<q\leq0.24$, $0\leq r\leq0.5$, $0\leq t\leq1$, $0<q+(\alpha-5)\times r-(\beta-1)\times t$, and $0< q/11 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof;

$$\text{Formula 4d} \qquad Li_{7-q-(\alpha-5)\times r+(\beta-1)\times t}M1_qNb_{1-r}M3^\alpha_rCl_{12-t}X2^\beta_t$$

wherein in Formula 4g, $0<q\leq0.24$, $0\leq r\leq0.5$, $0\leq t\leq1$, $0<q+(\alpha-5)\times r-(\beta-1)\times t$, and $0< q/12 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof.

The compound represented by Formula 1 may be, for example, a compound represented by Formula 5:

$$\text{Formula 5} \qquad Li_{p-q-(\alpha-5)\times r+(\beta-1)\times t}M1_qV_{1-r}M3^\alpha_rCl_{s-t}X2^\beta_t$$

wherein in Formula 5, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be $BH_4$, $NO_2$, $NO_3$, CN, $ClO_3$, $SO_4$, $SO_3$, $CO_3$, $PO_4$, $BO_3$, $AsO_4$, P, N, or a combination thereof.

The compound represented by Formula 5 may be, for example, a compound represented by Formulas 5a to 5g:

$$\text{Formula 5a} \qquad Li_{1-q-(\alpha-5)\times r+(\beta-1)\times t}M1_qV_{1-r}M3^\alpha_rCl_{6-t}X2^\beta_t$$

wherein in Formula 5a, $0<q\leq0.24$, $0\leq r\leq0.5$, $0\leq t\leq1$, $0<q+(\alpha-5)\times r-(\beta-1)\times t$, and $0< q/6 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof;

$$\text{Formula 5a} \qquad Li_{1-q-(\alpha-5)\times r+(\beta-1)\times t}M1_qV_{1-r}M3^\alpha_rCl_{7-t}X2^\beta_t$$

wherein in Formula 5b, $0<q\leq0.24$, $0\leq r\leq0.5$, $0\leq t\leq1$, $0<q+(\alpha-5)\times r-(\beta-1)\times t$, and $0< q/7 \leq 0.02$,

M1 may be Na, K, Rb, Cs, Ag, Cu, or a combination thereof,

M3° may be Sc, Ho, Lu, Yb, Tm, Er, Dy, In, Ga, Sm, Gd, B, Al, Ga, In, Y, La, Ce, Pr, Nd, or a combination thereof,

X2$^\beta$ may be a monovalent anion, a divalent anion, a trivalent anion, or a combination thereof;

$$\text{Formula 5c} \qquad Li_{3-q-(\alpha-5)\times r+(\beta-1)\times t}M1_qV_{1-r}M3^\alpha_rCl_{8-t}X2^\beta_t$$

wherein in Formula 5c, $0<q\leq0.24$, $0\leq r\leq0.5$, $0\leq t\leq1$, $0<q+(\alpha-5)\times r-(\beta-1)\times t$, and $0< q/8 \leq 0.02$,

M1 may be Na, K, Rb, Cs, Ag, Cu, or a combination thereof,

M3$^\alpha$ may be Sc, Ho, Lu, Yb, Tm, Er, Dy, In, Ga, Sm, Gd, B, Al, Ga, In, Y, La, Ce, Pr, Nd, or a combination thereof,

$X2^{\beta}$ may be a monovalent anion, a divalent anion, a trivalent anion, or a combination thereof;

$$\text{Formula 5d} \qquad \text{Li}_{4-q-(\alpha-5)\times r+(\beta-1)\times t}\text{M1}_q\text{V}_{1-r}\text{M3}^{\alpha}{}_r\text{Cl}_{9-t}\text{X2}^{\beta}{}_t$$

wherein in Formula 5d, $0<q\leq0.24$, $0\leq r\leq0.5$, $0\leq t\leq1$, $0<q+(\alpha-5)\times r-(\beta-1)\times t$, and $0< q/9 \leq 0.02$,
M1 may be Na, K, Rb, Cs, Ag, Cu, or a combination thereof,
$M3^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

$$\text{Formula 5e} \qquad \text{Li}_{5-q-(\alpha-5)\times r+(\beta-1)\times t}\text{M1}_q\text{V}_{1-r}\text{M3}^{\alpha}{}_r\text{Cl}_{10-t}\text{X2}^{\beta}{}_t$$

wherein in Formula 5e, $0<q\leq0.24$, $0\leq r\leq0.5$, $0\leq t\leq1$, $0<q+(\alpha-5)\times r-(\beta-1)\times t$, and $0< q/10 \leq 0.02$,
M1 may be Na, K, Rb, Cs, Ag, Cu, or a combination thereof,
$M3^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

$$\text{Formula 5f} \qquad \text{Li}_{6-q-(\alpha-5)\times r+(\beta-1)\times t}\text{M1}_q\text{V}_{1-r}\text{M3}^{\alpha}{}_r\text{Cl}_{11-t}\text{X2}^{\beta}{}_t$$

wherein in Formula 5f, $0<q\leq0.24$, $0\leq r\leq0.5$, $0\leq t\leq1$, $0<q+(\alpha-5)\times r-(\beta-1)\times t$, and $0< q/11 \leq 0.02$,
M1 may be Na, K, Rb, Cs, Ag, Cu, or a combination thereof,
$M3^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof;

$$\text{Formula 5g} \qquad \text{Li}_{7-q-(\alpha-5)\times r+(\beta-1)\times t}\text{M1}_q\text{V}_{1-r}\text{M3}^{\alpha}{}_r\text{Cl}_{12-t}\text{X2}^{\beta}{}_t$$

wherein in Formula 5g, $0<q\leq0.24$, $0\leq r\leq0.5$, $0\leq t\leq1$, $0<q+(\alpha-5)\times r-(\beta-1)\times t$, and $0< q/12 \leq 0.02$,
M1 may be Na, K, Rb, Cs, Ag, Cu, or a combination thereof,
$M3^{\alpha}$ may be Sc, Ho, Lu, Yb, Tm, Er, Dy, In, Ga, Sm, Gd, B, Al, Ga, In, Y, La, Ce, Pr, Nd, or a combination thereof,
$X2^{\beta}$ may be a monovalent anion, a divalent anion, a trivalent anion, or a combination thereof.

The solid-state electrolyte containing the compound represented by Formula 1, due to being amorphous, may further facilitate lithium transfer within the solid-state electrolyte compared to lithium transfer in a crystalline solid-state electrolyte.

In the solid-state electrolyte containing the compound represented by Formula 1, an ionic radius of M1 may be greater than an ionic radius of Li. As the ionic radius of M1 is greater than the ionic radius of Li, for example, distortions in the lattice structure may occur thus allowing lithium ions to be more easily transferred in the solid-state electrolyte.

In the solid-state electrolyte including the compound represented by Formula 1, an ionic radius of X1, $X2^{\beta}$, or a combination thereof, may be about 125 picometers (pm) or greater, about 130 pm or greater, about 140 pm or greater, about 150 pm or greater, or about 160 pm or greater. In the solid-state electrolyte including the compound represented by Formula 1, the ionic radius of X1, $X2^{\beta}$, or a combination thereof, may be about 125 pm to about 200 pm, about 130 pm to about 200 pm, about 140 pm to about 200 pm, about 150 pm to about 200 pm, or about 160 pm to about 200 pm. When the ionic radius of X1, $X2^{\beta}$, or a combination thereof, in the solid-state electrolyte has such an ionic radius , interactions between lithium ions and anions may be weakened, and as a result, lithium transfer within the solid-state electrolyte may be facilitated. An ionic radius of oxygen ($O^{2-}$) may be, for example, about 126 pm, an ionic radius of $Cl^-$ may be, for example, about 167 pm, and an ionic radius of Br -may be, for example, about 182 pm.

The solid-state electrolyte containing the compound represented by Formula 1, due to including X1, may be electrochemically stable at a high voltage.

The solid-state electrolyte containing the compound represented by Formula 1 may include, for example, an X1 anion unit and an $X2^{\beta}$ anion unit. The solid-state electrolyte containing the compound represented by Formula 1 due to including both the X1 anion unit and the $X2^{\beta}$ anion unit simultaneously, may provide an mixed-anion effect. As a result, the solid-state electrolyte containing the compound represented by Formula 1 may be electrochemically stable at a high voltage of 3.0 volts (V) or greater (vs. lithium metal) and may also provide improved ion conductivity. Being electrochemically stable herein means an oxidation or reduction is not detectable within a potential window of 0.6 V to 4.2 V. For example, electrochemically stable solid-state electrolyte does not show an oxidation current or reduction current within a potential window of 0.6 V to 4.2 V in comparison with baseline current.

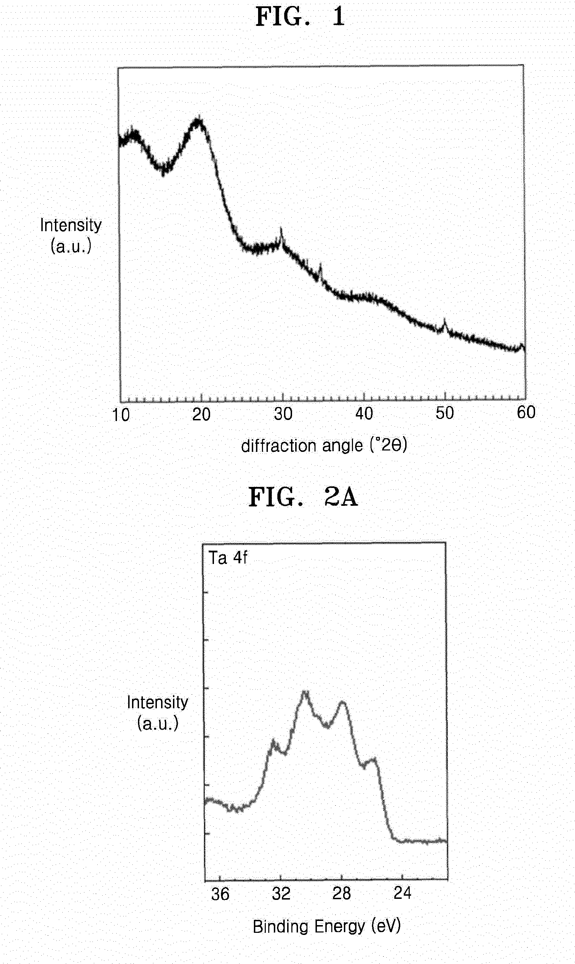

Referring to FIG. 1, in an x-ray diffraction (XRD) spectrum of a solid-state electrolyte containing the compound represented by Formula 1, the solid-state electrolyte has a first peak at a diffraction angle of $41.5\pm1.0°2\theta$ and a second peak at a diffraction angle of $29.8\pm1.0°2\theta$, when analyzed by X-ray diffraction using CuK$\alpha$ radiation. A ratio (Ib/Ia) of

an intensity (Ib) of a second peak to an intensity (Ia) of a first peak may be about 3 or less, about 2.5 or less, about 2 or less, about 1.5 or less, about 1 or less, about 0.7 or less, about 0.5 or less, or about 0.1 or less. The solid-state electrolyte containing the compound represented by Formula 1 due to having the peak intensity ratio (Ib/Ia) in the above ranges, may provide improved ion conductivity.

Referring to FIG. 1, a first full width at half maximum (FWHM, F1) of a third peak of the solid-state electrolyte at a diffraction angle of $30.1 \pm 1.0°2\theta$ in the XRD spectrum of the solid-state electrolyte containing the compound represented by Formula 1 may be greater than a second FWHM (F2) of a third peak of a crystalline $LiTaCl_6$ at a diffraction angle of $30.1\pm1.0°2\theta$ in an XRD spectrum of the crystalline $LiTaCl_6$ when measured under a same condition as the solid-state electrolyte and using $CuK\alpha$ radiation. The solid-state electrolyte containing the compound represented by Formula 1, due to having such a relationship between the first FWHM (F1) and the second FWHM (F2), may provide improved ion conductivity. A ratio (F1/F2) of the first FWHM (F1) to the second FWHM (F2) may be, for example about 5 or greater. The solid-state electrolyte containing the compound represented by Formula 1 due to having the ratio (F1/F2) of the first FWHM (F1) to the second FWHM (F2) in the above ranges may provide improved ion conductivity.

Lithium may be randomly placed within the compound represented by Formula 1. Such random placement of the lithium within the compound represented by Formula 1may further improve the ion conductivity of the solid-state electrolyte containing the compound represented by Formula 1.

The solid-state electrolyte containing the compound represented by Formula 1 may have an ion conductivity at 25 °C of about $1\times10^{-3}$ Siemens per centimeter (S/cm) or greater, about $2\times10^{-3}$ S/cm or greater, about $3\times10^{-3}$ S/cm or greater, or about $4\times10^{-3}$ S/cm or greater. The solid-state electrolyte containing the compound represented by Formula 1 may have an ion conductivity at 25 °C of about $1\times10^{-3}$ S/cm to about $1\times10^{-1}$ S/cm, about $1\times10^{-3}$ S/cm to about $1\times10^{-2}$ S/cm, about $1\times10^{-3}$ S/cm to about $8\times10^{-3}$ S/cm, or about $1\times10^{-3}$ S/cm to about $5\times10^{-3}$ S/cm. The solid-state electrolyte containing the compound represented by Formula 1 due to having an increased ion conductivity in the above ranges, may be used as an electrolyte of a lithium battery.

The ion conductivity at 25 °C of the compound represented by Formula 1 may be greater than an ion conductivity at 25 °C of a compound having q = 0 in Formula 1. In the compound represented by Formula 1, due to including M1 having a greater ionic radius than an ionic radius of Li in the Li site, the lattice structure of the compound represented by Formula 1 may have distortions, further facilitating lithium transfer, and thus, the ion conductivity of the compound represented by Formula 1 may be further improved.

The solid-state electrolyte containing the compound represented by Formula 1 may have a lithium diffusion barrier of about 400 meV or less, 380 meV or less, 360 meV or less, 340 meV or less, 320 meV or less, or 300 meV or less. The lithium diffusion barrier of the solid-state electrolyte including the compound represented by Formula 1 may be about 10 millielectronvolts (meV) to about 400 meV, about 10 meV to about 380 meV, about 10 meV to about 360 meV, about 10 meV to about 340 meV, about 10 meV to about 320 meV, or about 10 meV to about 300 meV. By having such a low lithium diffusion barrier in the above ranges, the solid-state electrolyte containing the compound represented by Formula 1 may facilitate lithium diffusion within the solid-state electrolyte and improve the ion conductivity of the solid-state electrolyte.

The solid-state electrolyte containing the compound represented by Formula 1 may be electrochemically stable, for example, within a potential window with respect to lithium metal, between about 0.6 and about 4.2 V, between about 1.0 and about 4.2 V, between about 1.5 and about 4.2 V, between about 2.0 and about 4.2 V, or between about 2.5 and about 4.2 V. The solid-state electrolyte due to being electrochemically stable in such a wide voltage range, may be suitable for lithium batteries having various voltages.

The solid-state electrolyte containing the compound represented by Formula 1 is not limited to any particular form. The solid-state electrolyte containing the compound represented by Formula 1 may be in a form of particles, for example. The particles may be spherical particles or non-spherical particles. The solid-state electrolyte in the form of particles may be formed into various shapes. The formed solid-state electrolyte may be in the form of a sheet, for example.

Lithium Battery

A lithium battery according to another embodiment may include a cathode layer; an anode layer; and an electrolyte layer between the cathode layer and the anode layer, wherein the cathode layer, the electrolyte layer, or a combination thereof, may include the above-described solid-state electrolyte. The above-described solid-state electrolyte may include the compound represented by Formula 1. By including the above-described solid-state electrolyte, the lithium battery may have decreased internal resistance and improved cycle characteristics.

The electrolyte layer may include a first electrolyte layer adjacent to the cathode layer and a second electrolyte layer placed between the first electrolyte layer and the anode layer. The first electrolyte layer may include the solid-state electrolyte represented by Formula 1. The first electrolyte layer may include the solid-state electrolyte represented by Formula 1, and the second electrolyte layer may not include the solid-state electrolyte represented by Formula 1. Since the second electrolyte layer does not contain the solid-state electrolyte represented by Formula 1, side reactions of the solid-state electrolyte represented by Formula 1 with the anode may be suppressed.

The lithium battery is not particularly limited and may be, for example, a lithium ion battery, a solid-state battery, a multilayer ceramic (MLC) battery, a lithium air, or battery. Some of the aforementioned batteries will be described in more detail below.

Lithium Ion Battery

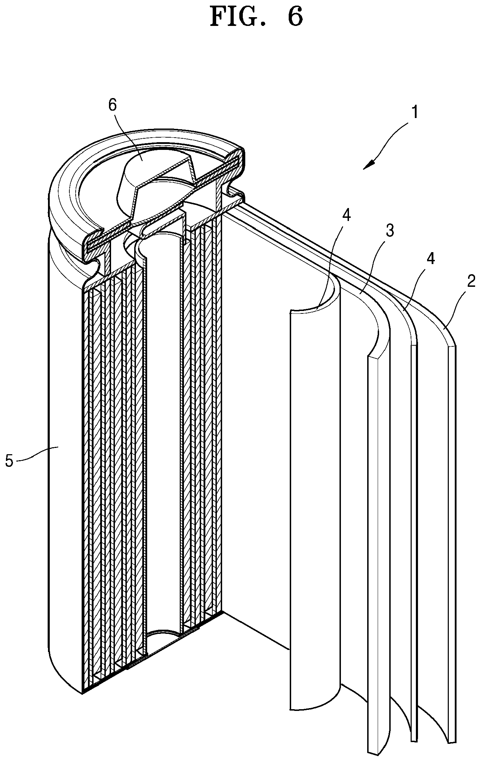

FIGS. 6 to 8 are schematic diagrams of a lithium ion battery according to an embodiment.

For example, the lithium ion battery may be a lithium battery including a liquid electrolyte. The lithium ion battery may include the solid-state electrolyte containing the compound represented by Formula 1.

For example, the lithium ion battery may include a cathode including a cathode active material; an anode including an anode active material; and a liquid electrolyte between the cathode and the anode, wherein the cathode may include the solid-state electrolyte containing the compound represented by Formula 1. For example, the lithium ion battery may include a cathode, an anode, and a liquid electrolyte between the cathode and the anode, wherein a protection layer including the solid-state electrolyte containing the compound represented by Formula 1 may be disposed on a side of the cathode. For example, the lithium ion battery may include a cathode active material layer, and the cathode active material layer may include: a core including a cathode active material; and a composite cathode active material including a first coating layer disposed on the core, wherein the first coating layer may include the solid-state electrolyte containing the compound represented by Formula 1.

For example, the lithium ion battery may be prepared as follows.

First, a cathode may be prepared. A cathode active material, a conductive material, a binder, and a solvent may be mixed together to produce a cathode active material composition. The cathode active material composition may be directly coated on the cathode current collector and the coated cathode current collector may be dried to form a cathode. Or, the cathode active material composition may be cast on a separate support, and a film obtained by exfoliating the cathode active material composition from the support may be laminated on the cathode current collector to form a cathode. Alternatively, the cathode active material composition may be prepared in a form of an electrode ink containing an excess amount of solvent, and then printed on a support by an ink-jet technique or Gravure printing technique, to form a cathode. The printing technique is not limited to the aforementioned techniques and may be any suitable method available for general coating and printing.

The solid-state electrolyte containing the compound represented by Formula 1 may be coated on a side of a cathode active material layer included in a cathode to thereby form a cathode protection layer. Alternatively, solid-state electrolyte particles containing the compound represented by Formula 1 may be added to the cathode active material composition and thus included in the cathode active material layer.

The cathode current collector may include a metal substrate. Examples of the cathode current collector may include a plate, or a foil, made of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector may be omitted. The cathode current collector may further include a carbon layer disposed on one side or both sides of the metal substrate. By having the carbon layer further disposed on the metal substrate, it is possible to prevent a metal in the metal substrate from being corroded by a solid-state electrolyte included in a cathode layer, and to reduce an interfacial resistance between the cathode active material layer and the cathode current collector. For example, the carbon layer may have a thickness of about 0.1 micrometer ($\mu$m) to about 5 $\mu$m, about 0.1 $\mu$m to about 3 $\mu$m, or about 0.1 $\mu$m to about 1 $\mu$m. When the thickness of the carbon layer is excessively thin, it may be difficult to completely block the contact between the metal substrate and the solid-state electrolyte. When the thickness of the carbon layer is too thick, energy density of the solid-state secondary battery may be decreased. The carbon layer may include amorphous carbon, or crystalline carbon.

For the cathode active material, any suitable material that is commonly used in the art as a cathode active material may be used. For example, the cathode active material may be a lithium transition metal oxide, or a transition metal sulfide. For example, the cathode active material may be at least one composite oxides of lithium with a metal of cobalt, manganese, nickel, or a combination thereof. Specifically, the cathode active material may use a compound represented by any one of the following formulas: $Li_aA_{1-b}B'_bD'_2$ (In the formula, $0.90 \leq a \leq 1.8$, and $0 \leq b \leq 0.5$); $Li_aE_{1-b}B'_bO_{2-c}D'_c$ (In the formula, $0.90 \leq a \leq 1.8$, $0 \leq b \leq 0.5$, and $0 \leq c \leq 0.05$); $LiE_{2-b}B'_bO_{4-c}D'_c$ (In the formula, $0 \leq b \leq 0.5$, and $0 \leq c \leq 0.05$); $Li_aNi_{1-b-c}Co_bB'_cD'_a$ (In the formula, $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (In the formula, $0.90 \leq a \leq 1.8$, $0 \leq b \leq 0.5$, $0 \leq c \leq 0.05$, and $0 < \alpha < 2$); $Li_aNi_{1-b-c}Co_bB'_cO_{2-\alpha}F'_2$ (In the formula, $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (In the formula, $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_\alpha$ (In the formula, $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_2$ (In the formula, $0.90 \leq a \leq 1.8$, $0 \leq b \leq 0.5$, $0 \leq c \leq 0.05$, and $0 < \alpha < 2$); $Li_aNi_bE_cG_dO_2$ (In the formula, $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (In the formula, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (In the formula, $0.90 \leq a \leq$

1.8, and $0.001 \leq b \leq 0.1$); $Li_aCoG_bO_2$ (In the formula, $0.90 \leq a \leq 1.8$, and $0.001 \leq b \leq 0.1$); $Li_aMnG_bO_2$ (In the formula, $0.90 \leq a \leq 1.8$, and $0.001 \leq b \leq 0.1$); $Li_aMn_2G_bO_4$ (In the formula, $0.90 \leq a \leq 1.8$, and $0.001 \leq b \leq 0.1$); $QO_2$; $QS_2$; $LiQS_2$; $V_2O_5$; $LiV_2O_2$; $LiI'O_2$; $LiNiVO_4$; $Li_{(3-f)}J_2(PO_4)_3(0 \leq f \leq 2)$; $Li_{(3-f)}Fe_2(PO_4)_3(0 \leq f \leq 2)$; $LiFePO_4$, or a combination thereof. In the above formulas, A is Ni, Co, Mn, or a combination thereof; B' is Al, Ni, Co, Mn, Cr, Fe, Mg, Sr, V, an rare-earth element, or a combination thereof; D' is O, F, S, P, a combination thereof; E is Co, Mn, a combination thereof; F' is F, S, P, a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. Examples may include $LiCoO_2$, $LiMn_xO_{2x}$ (x=1, or 2), $LiNi_{1-x}Mn_xO_{2x}$ (0<x<1), $Ni_{1-x-y}Co_xMn_yO_2$ ($0 \leq x \leq 0.5$, $0 \leq y \leq 0.5$), $LiFePO_4$, $TiS_2$, $FeS_2$, $TiS_3$, $FeS_3$, or a combination thereof. For example, a conductive composition represented by Formula 1 may be coated on a surface of the cathode active material to inhibit a side reaction between the cathode active material and an electrolyte solution.

The conductive material may include, for example, carbon black, carbon fiber, graphite, or a combination thereof. The carbon black may be, for example, acetylene black, Ketjen black, super P carbon, channel black, furnace black, lamp black, thermal black, or a combination thereof. The graphite may be natural graphite or artificial graphite. A combination containing at least one of the aforementioned materials may be used. The cathode may further include an additional conductive material other than the carbonaceous conductive materials described above. Examples of the additional conductive material may include electrically conductive fibers such as metal fibers; metal powders such as fluorocarbon powder, aluminum powder or nickel powder; conductive whiskers such as zinc oxide or potassium titanate; or a polyethylene derivative. A combination containing at least one of the aforementioned conductive materials may be used. A content of the conductive material may be about 1 part by weight to about 10 parts by weight, or about 2 parts by weight to about 7 parts by weight, based on 100 parts by weight of a cathode active material. When the amount of the conductive material is within this range, for example, within a range of about 1 part by weight to about 10 parts by weight, the electrical conductivity of the cathode may be appropriate.

A binder may improve adhesion between components of the cathode and adhesion with respect to the cathode current collector. Examples of the binder may include polyacrylic acid (PAA), polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene-butadiene-rubber, fluorinated rubber, a copolymer thereof, or a combination thereof. A content of the binder may be about 1 part by weight to about 10 parts by weight, or about 2 parts by weight to about 7 parts by weight, based on 100 parts by weight of the cathode active material. By having the content of the binder within the above range, adhesion of the cathode active material layer to the cathode current collector may be further improved, thus suppressing a decrease in energy density of the cathode active material layer.

Examples of the solvent may include N-methylpyrrolidone (NMP), acetone, or water. The respective contents of the cathode active material, the conductive material, the binder, and the solvent are at a level commonly used in lithium batteries.

A plasticizer may be added to the cathode active material composition to form pores inside the cathode active material layer.

Next, an anode may be prepared. An anode active material, a conductive material, a binder, and a solvent may be mixed together to produce an anode active material composition. The anode active material composition may be directly coated on a copper current collector, and the coated copper current collector may be dried to form an anode. Or, the anode active material composition may be cast on a separate support, and a film obtained by exfoliating the anode active material composition from the support may be laminated on the copper current collector to form the anode. Alternatively, the anode active material composition may be prepared in the form of an electrode ink containing an excess amount of solvent, and then printed on a support by an ink-jet technique or Gravure printing technique, to form the anode. The printing technique is not limited to the aforementioned techniques and may be any suitable method available for coating and printing.

Examples of the anode active material may include a lithium metal, a lithium metal alloy, a metal alloyable with lithium, a transition metal oxide, a non-transition metal oxide, a carbonaceous material, or a combination thereof. The lithium metal alloy may be an alloy of lithium with a different metal such as indium. Examples of the metal alloyable with lithium may include Si, Sn, Al, Ge, Pb, Bi, Sb, a Si-Y' alloy (wherein Y' is an alkali metal, an alkaline earth metal, an element of Group 13, an element of Group 14, a transition metal, a rare earth metal, or a combination thereof, but not Si), a Sn-Y' alloy (wherein Y' is an alkali metal, an alkaline earth metal, an element of Group 13, an element of Group 14, a transition metal, a rare earth metal, or a combination thereof, but not Sn), or a combination thereof. Y' may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. The transition metal oxide may be, for example, a lithium titanium oxide, a vanadium oxide, a lithium vanadium oxide, or the like. The non-transition metal oxide may be, for example, $SnO_2$, $SiO_x$ (0<x<2), or the like. The carbonaceous material may be, for example, a crystalline carbon, an amorphous carbon, or a mixture thereof. Examples of the crystalline carbon may include graphite, including artificial graphite or natural graphite in shapeless, plate, flake, spherical or fiber form, and examples of the amorphous carbon may include soft carbon (low-temperature calcined carbon) or hard carbon, mesophase pitch carbides, calcined cokes, and the like. The anode active material may be, for example, lithium metal, a lithium metal alloy, or a combination thereof.

Conductive materials, binders, and solvents to be used in preparing the anode may be selected from among materials for use in preparing the cathode current plate. The respective amounts of the anode active material, the conductive material, the binder, and the solvent are at a level suitably used in lithium batteries.

A plasticizer may be added to the anode active material composition to form pores inside the anode active material layer.

Next, a separator may be prepared.

The cathode and the anode may be separated by a separator, and as the separator, any separator suitably used in lithium batteries may be used. Any separator capable of retaining a large quantity of electrolyte solution while exhibiting low resistance to ion migration in electrolyte may be suitable. For example, the separator may be any material of glass fiber, polyester, Teflon, polyethylene, polypropylene, polytetrafluoroethylene (PTFE), or a combination thereof. In addition, the separator may be in a form of nonwoven fabric or woven fabric. More specifically, a lithium ion battery may include a rollable separator formed of polyethylene, polypropylene, and a lithium ion polymer battery may include a separator having excellent organic liquid electrolyte immersion capability.

The separator may be prepared as follows. Once a separator composition is prepared by mixing a polymer resin, a filler, and a solvent, the separator composition may be directly coated on an electrode, and the coated electrode may be dried, to form a separator film, or the separator composition may be cast on a support and the cast support may be dried, and then, the separator film exfoliated from the support may be laminated on the electrode. The polymer resin is not limited to any particular material, and may be any suitable material used as a binder of an electrode plate. For example, a vinylidene fluoride/hexafluoropropylene copolymer, polyvinylidene fluoride, polyacrylonitrile, polymethyl methacrylate, or a mixture thereof may be used for the polymer resin. It may be suitable to use a vinylidene fluoride/hexafluoropropylene copolymer having about 8 wt% to about 25 wt% of hexafluoropropylene.

The separator may include the solid-state electrolyte containing the compound represented by Formula 1. For example, at least one side of the separator may further include a coating layer including the solid-state electrolyte containing the compound represented by Formula 1. As the separator further includes the coating layer, heat resistance and dimensional stability of the separator may be further improved. For example, the separator may include a porous substrate; and a coating layer disposed on one side or both sides of the porous substrate, wherein the coating layer may include the solid-state electrolyte containing the compound represented by Formula 1.

Next, a liquid electrolyte may be prepared.

The liquid electrolyte may be an organic electrolyte solution including an organic solvent. The organic electrolyte solution may be prepared by dissolving a lithium salt in an organic solvent. The organic solvent may be any suitable material that can be used as an organic solvent in the art. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof. The lithium salt may be any suitable material that can be used as a lithium salt in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (Here, x and y are different from each other and each independently an integer of 1 to 20), LiCl, LiI, or a mixture thereof. A concentration of the lithium salt may be, without being strictly limited to, about 0.1 molar (M) to about 10 M, or about 0.1 M to about 5 M and may be appropriately modified in a range that provides improved battery performance. For example, the liquid electrolyte may further include a flame retardant, such as a phosphorus-based flame retardant, a halogen-based flame retardant, and the like.

Referring to FIG. 6, a lithium ion battery 1 according to an embodiment may include a cathode 3, the above-described anode 2, and a separator 4. The cathode 3, the anode 2, and the separator 4 may be wound or folded to thereby form a battery structure 7. The battery structure 7 may be accommodated in a battery case 5. The battery case 5 may be injected with a cathode electrolyte forming composition, which is crosslinked, and sealed with a cap assembly 6 to thereby form a lithium metal battery 1. The battery case 5 may have a cylindrical shape, but is not necessarily limited thereto, and may have a polygonal shape, a thin-film shape, and the like.

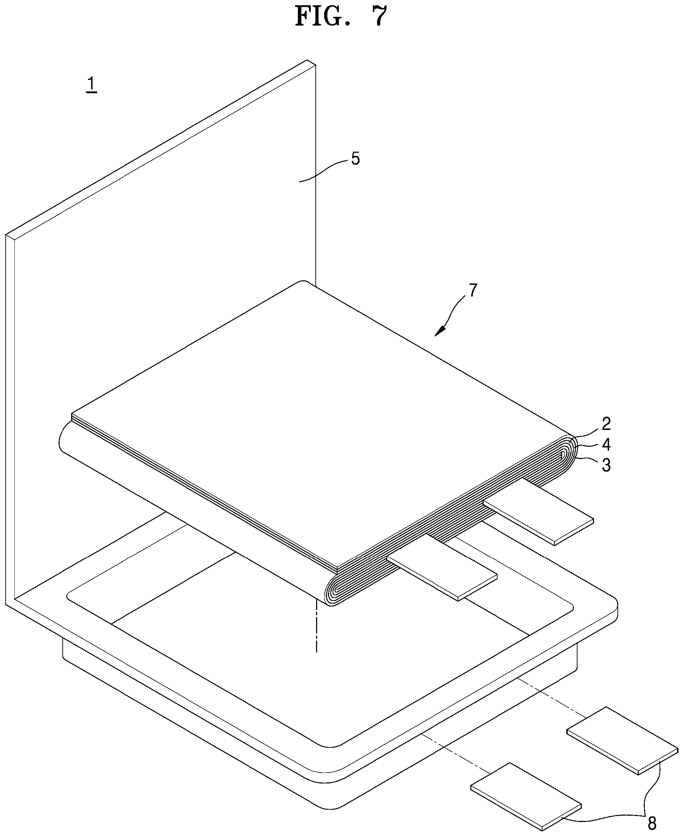

Referring to FIG. 7, a lithium ion battery 1 according to an embodiment may include a cathode 3, the above-described anode 2, and a separator 4. The separator 4 may be disposed between the cathode 3 and the anode 2, and the cathode 3, the anode 2, and the separator 4 may be wound or folded to form a battery structure 7. The battery structure 7 may be accommodated in a battery case 5. An electrode tab 8, acting as an electrical path for guiding an electrical current formed in the battery structure 7 to the outside, may be included. The battery case 5 may be injected with a cathode electrolyte forming composition, which is crosslinked, and sealed to thereby form a lithium ion battery 1. The battery case 5 has a polygonal shape, but is not necessarily limited thereto, and may have a cylindrical shape, a thin-film shape, and the like.

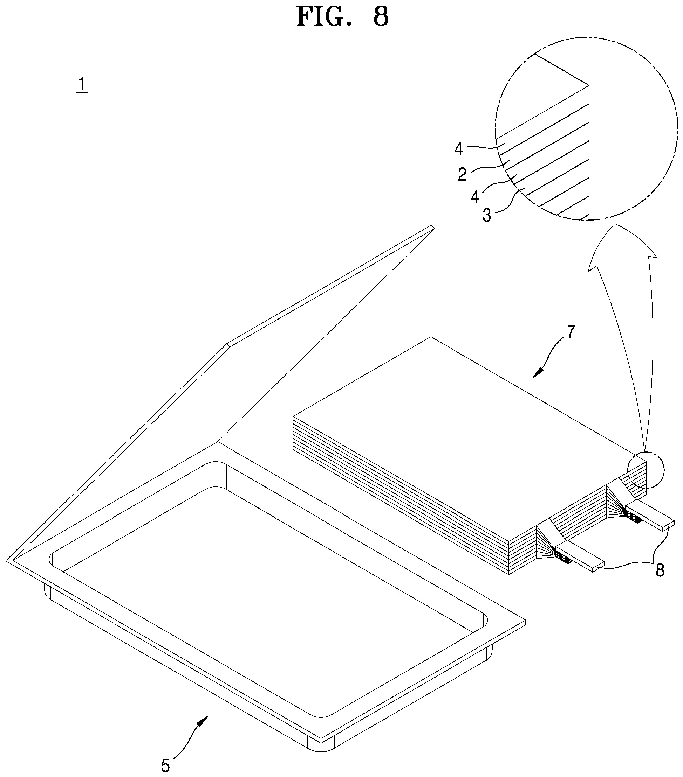

Referring to FIG. 8, a lithium ion battery 1 according to an embodiment may include a cathode 3, the above-described anode 2, and a separator 4. The separator 4 may be disposed between the cathode 3 and the anode 2 to form a battery structure. The battery structure 7 may be stacked in a bi-cell structure and then accommodated in a battery case 5. An electrode tab 8, acting as an electrical path for guiding an electrical current formed in the battery structure 7 to the outside, may be included. The battery case 5 may be injected with a cathode electrolyte forming composition, which is crosslinked, and sealed to thereby form a lithium ion battery 1. The battery case 5 has a polygonal shape, but is not necessarily limited thereto, and may have a cylindrical shape, a thin-film shape, and the like.

A pouch-type lithium ion battery may be formed by using a pouch as the case for the lithium ion battery in FIGS. 6 to 8. The pouch-type lithium ion battery may include one or more battery structures. A separator may be disposed between a cathode and an anode, to thereby form a battery structure. The battery structures may be stacked in a thickness direction and immersed in an organic electrolyte solution, and then accommodated and sealed in a pouch to thereby form a pouch-type lithium ion battery. For example, although not illustrated in the drawings, the above-described cathode, anode, and separator may be simply stacked and then accommodated in a pouch in the form of an electrode assembly, or may be wound or folded into an electrode assembly in the form of a jelly roll and then accommodated in a pouch. Subsequently, the pouch may be injected with a cathode electrolyte forming composition, thermally crosslinked, and then sealed to thereby form a lithium ion battery.

The lithium ion battery may have excellent discharge capacity and lifetime characteristics, and high energy density, and thus may be used in an electric vehicle (EV), for example. For example, the lithium ion battery may be used in a hybrid vehicle, such as a plug-in hybrid electric vehicle (PHEV) and the like. Also, the lithium ion battery may be used in any field that requires a large amount of energy storage. For example, the lithium ion battery may be used in an electric bicycle, a power tool, and the like.

A plurality of lithium ion batteries may be stacked to form a battery module, and a plurality of battery modules may form a battery pack. Such a battery pack may be utilized in all types of devices in which high capacity and high output are desired. For example, such a battery pack may be used in a laptop computer, a smartphone, an electric vehicle, and the like. The battery module may include, for example, a plurality of batteries and a frame holding the batteries. The battery pack may include, for example, a plurality of battery modules, and a bus bar connecting the battery modules. The battery module and/or battery pack may further include a cooling device. A plurality of battery packs may be managed by a battery management system. The battery management system may include a battery pack and a battery control device connected to the battery pack.

Solid-state Battery

For example, a solid-state battery may be a battery including a solid-state electrolyte. The solid-state battery may include the solid-state electrolyte represented by Formula 1.

For example, the solid-state battery may include a cathode layer including a cathode active material; an anode layer including an anode active material; and a liquid electrolyte between the cathode layer and the anode layer, wherein the cathode layer, the solid-state electrolyte layer, or a combination thereof, may include the solid-state electrolyte containing the compound represented by Formula 1. For example, the solid-state battery may include a cathode active material layer, and the cathode active material layer may include the solid-state electrolyte containing the compound represented by Formula 1. The solid-state battery may include a solid-state electrolyte layer disposed between a cathode layer and an anode layer, and the solid-state electrolyte layer may include the solid-state electrolyte layer containing the compound represented by Formula 1. For example, the solid-state battery may include a cathode active material layer, and the cathode active material layer may include: a core including a cathode active material; and a composite cathode active material including a first coating layer disposed on the core, wherein the first coating layer may include the solid-state electrolyte represented by Formula 1.

Type 1: Solid-State Battery Employing Non-Precipitation Type Anode

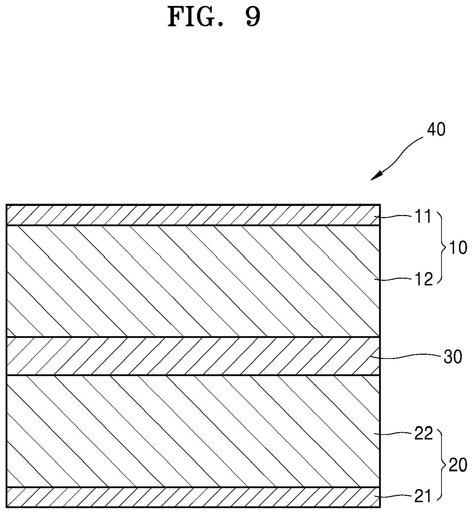

FIG. 9 is a schematic diagram of a solid-state battery including a non-precipitation type anode according to an embodiment. In the solid-state battery including the non-precipitation type anode, the initial charge capacity of an anode active material layer at the beginning of charging may be, for example, about 50% or greater, about 60% or greater, about 70% or greater, about 80% or greater, about 90% or greater, or about 100% or greater, relative to the initial charge capacity of a cathode active material layer.

The solid-state type lithium battery may be prepared as follows.

First, a solid-state electrolyte layer may be prepared. The solid-state electrolyte layer may include a solid-state electrolyte. For example, the solid-state electrolyte layer may be prepared by mixing and drying the solid-state electrolyte containing the compound represented by Formula 1 and a binder, or may be prepared by compression of an electrolyte powder containing the compound represented by Formula 1 into a particular form. For example, the solid-state electrolyte layer may be prepared by mixing and drying the solid-state electrolyte containing the compound represented by Formula 1, a sulfide-based and/or oxide-based solid-state electrolyte, and a binder. Alternatively, the solid-state electrolyte layer may be prepared by compression of a solid-state electrolyte powder containing the compound represented by Formula 1 and a sulfide-based and/or oxide-based solid-state electrolyte powder into a particular form. For example, the solid-state electrolyte layer may be prepared by mixing and drying the sulfide-based and/or oxide-based solid-state electrolyte and the binder, or may be prepared by compression of the sulfide-based and/or oxide-based electrolyte powder into a particular form.

For example, the solid-state electrolyte may be deposited using a film formation method by blasting, aerosol deposition, cold spraying, sputtering, chemical vapor deposition, spraying, or the like, and the solid-state electrolyte layer may be formed thereby. In addition, the solid-state electrolyte layer may be formed by compressing the solid-state electrolyte. In addition, the solid-state electrolyte layer may be formed by mixing the solid-state electrolyte, a solvent, and a binder or a substrate and compressing the resulting mixture. In this case, the solvent or the substrate may be added to reinforce the strength of the solid-state electrolyte layer or to prevent short-circuits of the solid-state electrolyte.

For example, the binder included in the solid-state electrolyte layer may be styrene butadiene rubber (SBR), polytetrafluoroethylene, polyvinylidene fluoride, polyethylene, polyvinyl alcohol, and the like, but is not limited to the aforementioned materials and may be any suitable material used as a binder in the art. The binder in the solid-state electrolyte may be a binder of the same kind as the binder in the cathode layer, an anode layer, or a combination thereof, or may be a binder of a different kind therefrom.

The oxide-based solid-state electrolyte may be, for example, $Li_{1+x+y}Al_xTi_{2-x}Si_yP_{3-y}O_{12}$ ($0<x<2$ and $0\leq y<3$), $BaTiO_3$, $Pb(Zr_pTi_{1-p})O_3$ (PZT, $0\leq p\leq1$), $Pb_{1-x}La_xZr_{1-y}Ti_yO_3$ (PLZT) ($0\leq x<1$ and $0\leq y<1$), $Pb(Mg_{1/3}Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al_pGa_{1-p})_x(Ti_qGe_{1-q})_{2-x}Si_yP_{3-y}O_{12}$ ($0\leq x\leq1$, $0\leq y\leq1$, $0\leq p\leq1$, and $0\leq q\leq1$), $Li_xLa_yTiO_3$ ($0<x<2$ and $0<y<3$), $Li_2O$, $LiOH$, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, and x is an integer of 1 to 10), or a combination thereof. The solid-state electrolyte may be prepared by a sintering method. For example, the oxide-based solid-state electrolyte may be a garnet-type solid-state electrolyte of $Li_7La_3Zr_2O_{12}$ (LLZO), $Li_{3+x}La_3Zr_{2-a}M_aO_{12}$ (M doped LLZO, M=Ga, W, Nb, Ta, or Al, and x is selected from 1 to 10), or a combination thereof.

For example, the sulfide-based solid-state electrolyte may include lithium sulfide, silicon sulfide, phosphorus sulfide, boron sulfide, or a combination thereof. Sulfide-based solid-state electrolyte particles may include $Li_2S$, $P_2S_5$, $SiS_2$, $GeS_2$, $B_2S_3$, or a combination thereof. The sulfide-based solid-state electrolyte particles may be $Li_2S$ or $P_2S_5$. The sulfide-based solid-state electrolyte particles are known to have a higher lithium ion conductivity than other inorganic compounds. For example, the sulfide-based solid-state electrolyte may include $Li_2S$ and $P_2S_5$. If sulfide solid-state electrolyte materials of the solid-state electrolyte include $Li_2S-P_2S_5$, a molar ratio of $Li_2S$ and $P_2S_5$ may be, for example, in a range of about 50:50 to about 90:10. In addition, the sulfide-based solid-state electrolyte may include an inorganic solid-state electrolyte prepared by adding the compound such as $Li_3PO_4$, a halogen, a halogen compound, $Li_{2+2x}Zn_{1-x}GeO_4$ ("LISICON"), $Li_{3+y}PO_{4-x}N_x$ ("LIPON"), $Li_{3.25}Ge_{0.25}P_{0.75}S_4$ ("ThioLISICON"), $Li_2O-Al_2O_3-TiO_2-P_2O_5$ ("LATP"), or a combination thereof, to an inorganic solid-state electrolyte of $Li_2S-P_2S_5$, $SiS_2$, $GeS_2$, $B_2S_3$, or a combination thereof. Non-limiting examples of a sulfide solid-state electrolyte material may include $Li_2S-P_2S_5$; $Li_2S-P_2S_5-LiX$ (X is a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ (m and n each are a positive number, and Z is Ge, Zn, or G); $Li_2S-GeS_2$; $Li_2S-SiS_2-Li_3PO_4$; $Li_2S-SiS_2-Li_pMO_q$ (in the formula, p and q each are a positive number, and M is P, Si, Ge, B, Al, Ga, or In); or a combination thereof,. In this regard, the sulfide-based solid-state electrolyte material may be prepared by subjecting a starting material (e.g., $Li_2S$, or $P_2S_5$) of the sulfide-based solid-state electrolyte material to a treatment such as melt quenching, mechanical milling, and the like. In addition, a calcination process may be performed following the above treatment.

Next, a cathode may be prepared. The cathode may be prepared by forming a cathode active material layer including a cathode active material on a cathode current collector. The cathode active material layer may be prepared by a vapor deposition method or a solid-state method. The vapor deposition method may be, but not being limited to, pulsed laser deposition (PLD), sputtering deposition, or chemical vapor deposition (CVD), for example. Any of various vapor deposition methods suitable in the art may be used. The solid-phase method may be, but not being limited to, sintering, a sol-gel method, a doctor blade method, screen printing, slurry casting or powder compression, for example. Any of various solid phase methods suitable in the art may be used.

The cathode active material layer may include a cathode active material. The cathode active material and the cathode current collector may be selected from among materials for use in the lithium ion battery described above.

The cathode active material layer may further include, for example, a conducting agent, a binder, or the like.

The conducting agent and the binder may be selected from among materials for use in the lithium ion battery described above.

The cathode active material layer may include the solid-state electrolyte containing the compound represented by Formula 1. A protection layer including the solid-state electrolyte containing the compound represented by Formula 1 may be disposed on the cathode active material layer.

Next, an anode may be prepared.

The anode may be prepared by the same method as the cathode except that an anode active material is used instead of a cathode active material. The anode may be prepared by forming an anode active material layer including an anode active material, on an anode current collector.

The anode active material layer may include an anode active material. The anode active material and the anode current collector may be selected from among materials for use in the lithium ion battery described above. The anode active material may be, for example, lithium metal, a lithium metal alloy, or a combination thereof.

The anode active material layer may further include, for example, a binder, a conducting agent, or the like. The conducting agent and the binder may be selected from among materials for use in the lithium ion battery described above.

Referring to FIG. 9, a solid-state battery 40 may include a solid-state electrolyte layer 30, a cathode 10 disposed on a first side of the solid-state electrolyte layer 30, and an anode 20 disposed on a second side of the solid-state electrolyte layer 30. The solid-state electrolyte layer 30 may include a cathode active material layer 12 in contact with the solid-state electrolyte layer 30, and a cathode current collector 11 in contact with the cathode active material layer 12. The anode 20 may include an anode active material layer 22 in contact with the solid-state electrolyte layer 30 and an anode current collector 21 in contact with the anode active material layer 22. For a solid-state secondary battery 40, for example, each of the cathode active material layer 12 and the anode active material layer 22 may be formed on each of the first side and the second side of the solid-state electrolyte layer 30, and the cathode current collector 11 and the anode current collector 21 may be formed on the cathode active material layer 12 and the anode active material layer 22, respectively to thereby form a solid-state secondary battery 30. Alternatively, the anode active material layer 22, the solid-state electrolyte layer 30, the cathode active material layer 12, and the cathode current collector 11 may be sequentially disposed on the anode current collector 21 to thereby form the solid-state secondary battery 40.

Type 2: Solid-State Battery Employing Precipitation-Type Anode

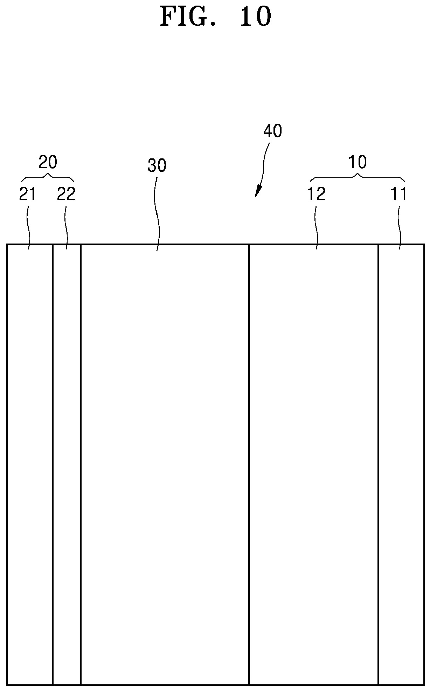

FIGS. 10 to 11 are each a schematic diagram of a solid-state battery including a precipitation-type anode according to an embodiment. In the solid-state battery including the precipitation-type anode, the initial charge capacity of an anode active material layer at the beginning of the charging may be, for example, about 50% or less, about 40% or less, about 30% or less, about 20% or less, about 10% or less, about 5% or less, or about 1% or less, relative to the initial charge capacity of a cathode active material layer. For example, the solid-state secondary battery 40 may include a cathode layer 10 including a cathode active material layer 12 disposed on a cathode current collector 11; an anode layer 20 including an anode active material layer 22 disposed on an anode current collector 21; and an electrolyte layer 30 disposed between the cathode layer 10 and the anode layer 20, wherein the cathode active material layer 12 and/or the solid-state electrolyte layer 30 may include a solid-state electrolyte.

A solid-state battery according to another embodiment may be prepared as follows.

The cathode and the solid-state electrolyte layer may be prepared following the same process as the solid-state secondary battery including the non-precipitation type anode described above.

Next, an anode may be prepared.

Referring to FIGS. 10 to 11, an anode 20 may include an anode current collector 21 and an anode active material layer 22 disposed on the anode current collector 21. For example, the anode active material layer 22 may include an anode active material and a binder.

The anode active material included in the anode active material layer 22 may have, for example, a particle shape. The median particle diameter of the anode active material having a particle shape may be, for example, about 4 $\mu$m or less, about 3 $\mu$m or less, about 2 $\mu$m or less, about 1 $\mu$m or less, or about 900 nanometers (nm) or less. The median particle diameter of the anode active material having a particle shape may be, for example, from about 10 nm to about 4 $\mu$m, about 10 nm to about 3 $\mu$m, about 10 nm to about 2 $\mu$m, about 10 nm to about 1 $\mu$m, or about 10 nm to about 900 nm. When the median particle diameter of the anode active material is in the above ranges, reversible absorbing and/or desorbing of lithium may take place more easily during charging/discharging. The median particle diameter of the anode active material may be, for example, a median particle diameter (D50) as measured using a laser-type particle size distribution analyzer.

The anode active material included in the anode active material layer 22 may include, for example, a carbonaceous anode active material, a metal or metalloid anode active material, or a combination thereof.

The carbonaceous anode active material may be, in particular, an amorphous carbon. The amorphous carbon may be, for example, carbon black (CB), acetylene black (AB), furnace black (FB), Ketjen black (KB), graphene, or the like, but is not necessarily limited thereto. The amorphous carbon may be any suitable material classified as amorphous carbon in the art. Amorphous carbon is carbon that has no crystalline structure or has an extremely low degree of crystallinity, and as such, is distinguished from crystalline carbon or graphitic carbon.

The metal or metalloid anode active material may include gold (Au), platinum (Pt), palladium (Pd), silicon (Si), silver (Ag), aluminum (Al), bismuth (Bi), tin (Sn), zinc (Zn), or a combination thereof, but is not necessarily limited to the aforementioned materials. The metal or metalloid anode active material may be any suitable metal anode active material or metalloid anode active material in the art that is capable of forming an alloy or a compound with lithium. For example, nickel (Ni) does not form an alloy with lithium and therefore, is not a metal anode active material.

The anode active material layer 22 may include a single type of such anode active materials, or may include a mixture of anode active materials of multiple different types. For example, the anode active material layer 22 may include only amorphous carbon as the anode active material, or may include gold (Au), platinum (Pt), palladium (Pd), silicon (Si), silver (Ag), aluminum (Al), bismuth (Bi), tin (Sn), zinc (Zn), or a combination thereof. Alternatively, the anode active material layer 22 may include a mixture of amorphous carbon with gold (Au), platinum (Pt), palladium (Pd), silicon (Si), silver (Ag), aluminum (Al), bismuth (Bi), tin (Sn), zinc (Zn), or a combination thereof. A ratio by weight of the mixture of amorphous carbon with a metal, such as gold, may be about 10:1 to about 1:2, about 5:1 to about 1:1, or about 4:1 to about 2:1, but is not necessarily limited thereto. The ratio may be selected according to a desired feature of the solid-state battery 40. As the anode active material has such a composition, cycle characteristics of the solid-state battery 40 may be further improved.

The anode active material included in the anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), or a combination thereof. In some cases, the metalloid may be a semiconductor. The amount of the second particle may be about 8 wt% to about 60 wt%, about 10 wt% to about 50 wt%, about 15 wt% to about 40 wt%, or about 20 wt% to about 30 wt%, with respect to the total weight of the mixture. As the content of the second particles is in the above ranges, cycle characteristics, for example, of the solid-state battery 40 may be further improved.

The binder included in the anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, or the like, but is not necessarily limited to the aforementioned materials. The binder may be any suitable material available as a binder in the art. The binder may consist of a single type of binder, or multiple binders of different types.

As the anode active material layer 22 contains a binder, the anode active material layer 22 may be stabilized on the anode current collector 21. In addition, cracking in the anode active material layer 22 may be inhibited despite volume changes and/or displacements of the anode active material layer 22 during charging/discharging. For example, when the anode active material layer 22 does not contain any binder, this may cause the anode active material layer 22 to easily separate from the anode current collector 21. The likelihood of a short circuit may be increased as the anode current collector 21 comes in contact with the solid-state electrolyte layer 30 at an exposed part of the anode current collector 21 formed as the anode current collector 21 has separated from the anode current collector 21. For example, a slurry containing materials of the anode active material layer 22 dispersed therein may be applied on the anode current collector 21, and the coated anode current collector 21 may be dried to produce the anode active material layer 22. By including a binder in the anode active material layer 22, stable dispersion of the anode active materials within the slurry may be achieved. For example, when the slurry is applied onto the anode current collector 21 by a screen printing method, clogging of a screen (for example, clogging by aggregates of the anode active materials) may be prevented.

The anode active material layer 22 may further include an additive for use in a conventional solid-state battery 40, such as a filler, a coating agent, a dispersing agent, an ion-conducting aid, or the like.

A thickness of the anode active material layer 22 may be, for example, about 50% or less, about 40% or less, about 30% or less, about 20% or less, about 10% or less, or about 5% or less, relative to a thickness of the cathode active material layer 12. The anode active material layer 22 may have a thickness of, for example, from about 1 $\mu$m to about 20 $\mu$m, about 2 $\mu$m to about 10 $\mu$m, or about 3 $\mu$m to about 7 $\mu$m. When the anode active material layer 22 has an excessively thin thickness, lithium dendrites formed between the anode active material layer 22 and the anode current collector 21 may disintegrate the anode active material layer 22, thus making it difficult to improve cycle characteristics of the solid-state battery 40. When the anode active material layer 22 has an excessively thick thickness, it may cause a decrease in energy density of the solid-state battery 40 and increase in internal resistance of the solid-state battery 40 by the anode active material layer 22, thus making it difficult to improve cycle characteristics of the solid-state battery 40.

As the thickness of the anode active material layer 22 is decreased, for example, the charging capacity of the anode active material layer 22 may also decrease. The charging capacity of the anode active material layer 22 may be, for example, about 50% or less, about 40% or less, about 30% or less, about 20% or less, about 10% or less, about 5% or less, about 2% or less, or about 1% or less, relative to the charging capacity of the cathode active material layer 12. The charging capacity of the anode active material layer 22 may be, for example, about 0.1% to about 50%, about 0.1% to about 40%, about 0.1% to about 30%, about 0.1% to about 20%, about 0.1% to about 10%, about 0.1% to about 5%, or about 0.1% to about 2%, relative to the charging capacity of the cathode active material layer 12. When the anode active material layer 22 has an excessively small charging capacity, the thickness of the anode active material layer 22 becomes extremely small, and therefore, during repeated charging/discharging processes, lithium dendrites formed between the anode active material layer 22 and the anode current collector 21 may disintegrate the anode active material layer 22 and thus make it difficult to improve cycle characteristics of the solid-state battery 40. When the anode active material layer 22 has an excessively large charge capacity, it may cause a decrease in energy density of the solid-state battery 40 and increase in internal resistance of the solid-state battery 40 by the anode active material layer 22, thus making it difficult to improve cycle characteristics of the solid-state battery 40.

Here, the charging capacity of the cathode active material layer 12 may be obtained by multiplying the charging specific capacity (milliampere. hours per gram, mAh/g) of the cathode active material by the mass of the cathode active material in the cathode active material layer 12. When a plurality of cathode active materials are used, the multiplication value of the charging specific capacity and the mass of each of the cathode active materials is calculated, and the sum of the multiplication values may be defined as the charging capacity of the cathode active material layer 12. A charging capacity of the anode active material layer 22 may be obtained by the same method as described herein with respect to the cathode active material layer 12. Here, the charging capacity of the anode active material layer 22 may be obtained by multiplying the charging specific capacity (mAh/g) of the anode active material by the mass of the anode active material in the anode active material layer 22. When more than one kinds of anode active materials are used, the multiplication value of the charging specific capacity and mass of each of the anode active materials is calculated, and the sum of the multiplication values may be defined as the charging capacity of the anode active material layer 22. Here, the charging specific capacities of the cathode and anode active materials are capacities estimated using solid-state half cells using a lithium metal as a counter electrode. The charging capacities of the cathode active material layer 12 and the anode active material layer 22 may be directly measured with the solid-state half cells. The charging capacity thus measured may be divided by the mass of each active material, thereby obtaining the charging specific capacity. In addition, the charging capacity of the cathode active material layer 12 and the anode active material layer 22 may be an initial charging capacity measured at the time of first cycle charging.

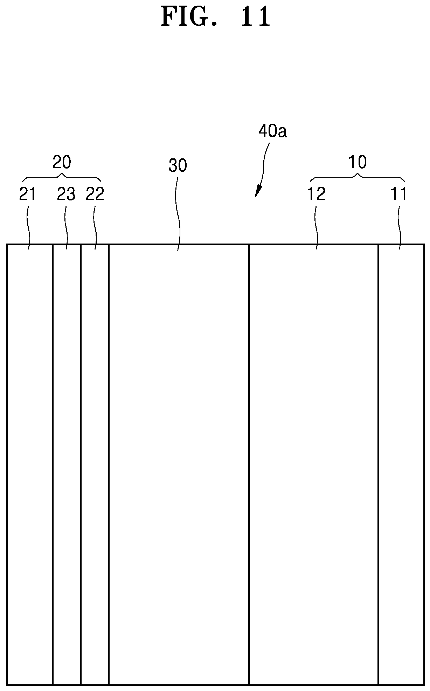

Referring to FIG. 11, a solid-state battery 40a may further include, for example, a metal layer 23 disposed between an anode current collector 21 and an anode active material layer 22. The metal layer 23 may be a metal foil or a plated metal layer. The metal layer 23 may include lithium or a lithium alloy. Thus, the metal layer 23 may act as a lithium reservoir, for example. The lithium alloy may include, for example, Li-Al alloy, Li-Sn alloy, Li-In alloy, Li-Ag alloy, Li-Au alloy, Li-Zn alloy, Li-Ge alloy, Li-Si alloy, and the like, but is not limited thereto and may be any suitable material available as a lithium alloy in the art. The metal layer 23 may comprise one of such alloys or lithium, or may comprise alloys of various types.

A thickness of the metal layer 23 is not particularly limited but may be, for example, about 1 μm to about 200 μm, about 1 μm to about 100 μm, about 1 μm to about 70 μm, about 1 μm to about 50 μm, about 1 μm to about 30 μm, or about 1 μm to about 20 μm. When the thickness of the metal layer 23 is too small, it may be difficult for the metal layer 23 to act as a lithium reservoir. When the thickness of the metal layer 23 is too large, the mass and volume of the solid-state battery 40 may increase, and cycle characteristics thereof may rather deteriorate. The metal layer 23 may be, for example, a metal foil having a thickness in such ranges.

In the solid-state battery 40a, the metal layer 23 may be positioned, for example, between the anode current collector 21 and the anode active material layer 22 prior to assembly of the solid-state battery 40a, or may be precipitated between the anode current collector 21 and the anode active material layer 22 by charging after assembly of the solid-state battery 40a. In a case in which the metal layer 23 is positioned between the anode current collector 21 and the anode active material layer 22 prior to assembly of the solid-state battery 40a, the metal layer 23 is a metal layer containing lithium, and therefore acts as a lithium reservoir. For example, prior to assembly of the solid-state battery 40a, a lithium foil may be positioned between the anode current collector 21 and the anode active material layer 22. As a result, the solid-state battery 40a having the metal layer 23 may have further improved cycle characteristics. In a case in which the metal layer 23 is precipitated by charging after assembly of the solid-state battery 1a, since the metal layer 23 is not included at the time of assembly of the solid-state battery 40a, and as a result, energy density of the solid-state battery 40a increases. For example, when charging the solid-state battery 40a, the solid-state battery 40a is charged to exceed the charging capacity of the anode active material layer 22. That is, the anode active material layer 22 is overcharged. At the beginning of the charging, lithium is absorbed into the anode active material layer 22. That is, the anode active material included in the anode active material layer 22 may form an alloy or compound with lithium ions migrated from the cathode layer 10. If charging is performed to exceed the capacity of the anode active material layer 22, lithium may be precipitated, for example, on the back of the anode active material layer 22, that is, between the anode current collector 21 and the anode active material layer 22, and a metal layer that corresponds to the metal layer 23 may be formed by the precipitated lithium. The metal layer 23 may be a metal layer mainly composed of lithium (i.e., metal lithium). This result is attributable to the fact that the anode active material included in the anode active material layer 22 is composed of a material that forms an alloy or compound with lithium. During discharge, lithium in the anode active material layer 22 and the metal layer 23, that is, in metal layers, may be ionized and migrate toward the cathode layer 10. Accordingly, in the solid-state battery 40a, lithium may be used as the anode active material. In addition, since the metal layer 23 is covered by the anode active material layer 22, the anode active material layer 22 may function as a protective layer of the metal layer 23 while inhibiting precipitation and growth of lithium dendrites. Accordingly, short circuits and capacity fading in the solid-state battery 40a may be efficiently inhibited, and as a result, cycle characteristics of the solid-state battery 40a may be improved. In addition, if the metal layer 23 is to be disposed by charging after assembly of the solid-state battery 40a, the anode current collector 21, the anode active material layer 22, and the area therebetween may be Li-free regions not containing lithium, for example, in an initial state or discharged state of the solid-state battery 40a.

The anode current collector 21 may comprise a material that does not react with lithium, for example, a material that does not form an alloy or a compound with lithium. The material forming the anode current collector 21 may be, for example, copper (Cu), stainless steel, titanium (Ti), iron (Fe), cobalt (Co), nickel (Ni), and the like, but is not necessarily limited thereto and may be any material suitable as an electrode current collector in the art. The anode current collector 21 may consist of one of the aforementioned metals or an alloy of two or more metals, or a coating material. The anode current collector 21 may be, for example, a plate shape or a foil shape.

The solid-state battery 40, 40a may further include, for example, a thin film (not illustrated) containing an element alloyable with lithium on the anode current collector 21. The thin film may be positioned between the anode current collector 21 and the anode active material layer 22. The thin film may include, for example, an element capable of forming an alloy with lithium. Examples of the element alloyable with lithium may include, but are not limited to, gold (Au), silver (Ag), zinc (Zn), tin (Sn), indium (In), silicon (Si), aluminum (Al), bismuth (Bi), or the like, and may be any suitable element that can form an alloy with lithium in the art. The thin film may consist of one of the aforementioned metals or may consist of an alloy of various kinds of metals. When the thin film is disposed on the anode current collector 21, for example, the metal layer 23 being precipitated between a thin film and the anode active material layer 22 may have a further flattened precipitation form, and cycle characteristics of the solid-state battery 40, 40a may be further improved.

A thickness of the thin film may be, for example, from about 1 nm to about 800 nm, about 10 nm to about 700 nm, about 50 nm to about 600 nm, or about 100 nm to about 500 nm. When the thickness of the thin film is less than 1 nm, it may be difficult to achieve the function as a thin film. When the thickness of the thin film is excessively large, the thin film absorbs lithium into itself, causing a decrease in the precipitation amount of lithium at the anode, and this may cause the energy density of the solid-state battery to deteriorate and cycle characteristics of the solid-state battery 40, 40a to deteriorate. The thin film may be positioned on the anode current collectors 21 by a vacuum deposition method, a sputtering method, a plating method or the like, but is not limited to the aforementioned methods and may be any method suitable in the art that is capable of forming a thin film.

Multilayer Ceramic (MLC) Battery

A multilayer ceramic battery may include, for example, a plurality of cathode layers; a plurality of anode layers alternately disposed between the plurality of cathode layers; and a plurality of a solid-state electrolyte layers alternately disposed between the plurality of cathode layers and the plurality of anode layers. The solid-state electrolyte layer may include, for example, the solid-state electrolyte containing the compound represented by Formula 1. The solid-state electrolyte layer included in the multilayer ceramic battery may include, for example, an oxide-based solid-state electrolyte.

A multilayer ceramic battery may be, for example, a sintered product of a laminate in which a cathode active material precursor, an anode active material precursor, and a solid-state electrolyte precursor are sequentially disposed (e.g., deposited), or a sintered product of a laminate in which a cathode active material, an anode active material, and a solid-state electrolyte are sequentially deposited. For example, the multilayer ceramic battery may be provided with a laminate structure in which a plurality of unit cells is deposited so that a cathode active material layer and an anode active material layer face each other, the unit cell including a cathode layer including a cathode active material layer; a solid-state electrolyte layer; and an anode layer are sequentially and continuously deposited. The multilayer ceramic battery may further include, for example, a cathode current collector and/or an anode current collector. In a case in which the multilayer ceramic battery includes a cathode current collector, a cathode active material layer may be disposed on both sides of the cathode current collector. In a case in which the multilayer ceramic battery includes an anode current collector, an anode active material layer may be disposed on both sides of the anode current collector. As the multilayer ceramic battery further includes a cathode current collector and/or an anode current collector, high-rate characteristics of the battery may be further improved. In the multilayer ceramic battery, unit cells are stacked by providing a current collector layer on one or both of the uppermost layer and the lowermost layer of a stack, or by inserting a metal layer into the stack. A multilayer ceramic battery or thin film battery may be, for example, a small or micro cell that can be applied as, for example, a power source for internet of things (IoT) applications and a power source for wearable devices.

A multilayer ceramic battery or a thin film battery can also be applied to medium- or large-sized batteries such as electric vehicles (EVs) and energy storage systems (ESSs).

The anode included in the multilayer ceramic battery may include, for example, at least one anode active material of lithium metal phosphates, lithium metal oxides, metal oxides, or a combination thereof. For example, the anode active material may be a compound of $Li_{4/3}Ti_{5/3}O_4$, $LiTiO_2$, $LiM1_sM2_tO_u$ (M1 and M2 are transition metals, wherein s, t, u are arbitrary positive numbers), $TiO_x$ (0<x≤3), $Li_xV_2(PO_4)_3$ (0<x≤5), or a combination thereof. The anode active material may be, in particular, $Li_{4/3}Ti_{5/3}O_4$, $LiTiO_2$, or a combination thereof.

The cathode included in the multilayer ceramic battery may include a cathode active material. The cathode active material may be selected from among cathode active materials for use in a lithium ion battery. The cathode active material may include, for example, lithium metal phosphates lithium metal oxides, or a combination thereof. The cathode active material may include, for example, lithium cobalt oxide, lithium iron phosphate, lithium nickel cobalt manganese oxide, lithium nickel cobalt aluminum oxide, lithium nickel cobalt manganese aluminum oxide, or a combination thereof.

A current collector layer may be any suitable current collector layer that can function as a cathode current collector and/or an anode current collector. The current collector layer may include, for example, any metal among Ni, Cu, Ag, Pd, Au, Pt, or a combination thereof. The current collector layer may include, for example, an alloy containing Ni, Cu, Ag, Pd, Au, Pt, or a combination thereof. The alloy may be, for example, an alloy of two or more of Ni, Cu, Ag, Pd, Au, Pt, or a combination thereof. The alloy may be, for example, an Ag/Pd alloy. Such a metal and alloy may be a single type or a mixture of two or more types. The current collector layer as the cathode current collector and the current collector layer as the anode current collector may use the same material or may use different materials from each other. Since an alloy or mixed powder containing Ag and Pd by adjusting its ratio, can adjust its melting point to any melting point between the melting point of silver (962 °C) and the melting point of palladium (1,550 °C), the melting point may be adjusted to the batch sintering temperature, and due to a high electron conductivity, increase in battery internal resistance may be suppressed.

The solid-state electrolyte may be, for example, an oxide-based solid-state electrolyte. The oxide-based solid-state electrolyte may be selected from among materials for use in the solid-state battery described above. For example, the solid-state electrolyte may be a lithium compound of $Li_{3.25}Al_{0.25}SiO_4$, $Li_3PO_4$, $LiP_xSi_yO_z$ (in the formula, x, y, and z each are any positive number), or a combination thereof. The solid-state electrolyte may be, for example, $Li_{3.5}P_{0.5}Si_{0.5}O_4$. The solid-state electrolyte may be, for example, the compound represented by Formula 1. The solid-state electrolyte may be, for example, a mixture of an oxide-based solid-state electrolyte and the compound represented by Formula 1.

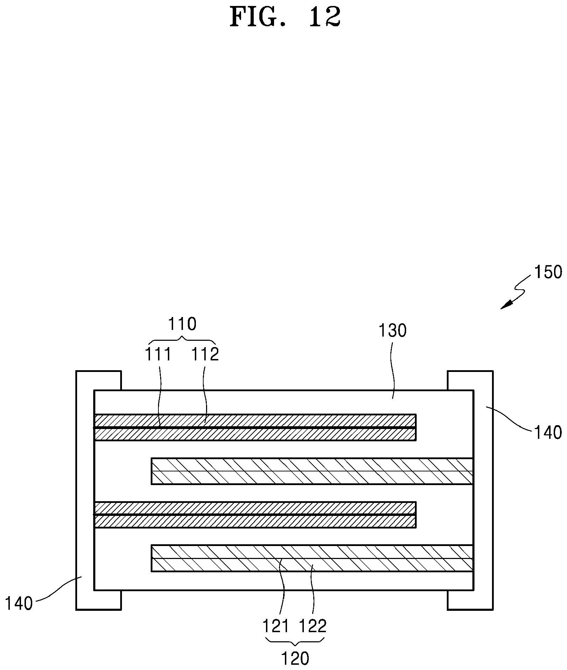

FIG. 12 is a schematic cross-sectional view of a multilayer ceramic (MLC) battery according to an embodiment. Referring to FIG. 12, a cathode active material layer 112 may be disposed on both sides of a cathode current collector 111 to form a cathode 110. An anode electrode 120 may be formed by depositing an anode active material layer 122 on both sides of an anode current collector 121. A solid-state electrolyte 130 may be disposed between the cathode 110 and the anode 120. A pair of external electrodes 140 may be formed at both ends of a battery body 150. The external electrode 140 may be connected to the cathode 110 and the anode 120, each of which tip portion is exposed outside the battery body 150, to act as an external terminal that electrically connects the cathode 110 and the anode 120 to an external element. One end of one of the pair of external electrodes 140 may be connected to the cathode 110 exposed to the outside of the battery body 150, and the other one of the pair of external electrodes 140 may have the other end thereof connected to the anode 120 exposed to the outside of the battery body 150. A multilayer ceramic (MLC) battery 150 may be produced by sequentially depositing an oxide electrode and a solid-state electrolyte and then, heat-treating the oxide electrode and the solid-state electrolyte simultaneously.

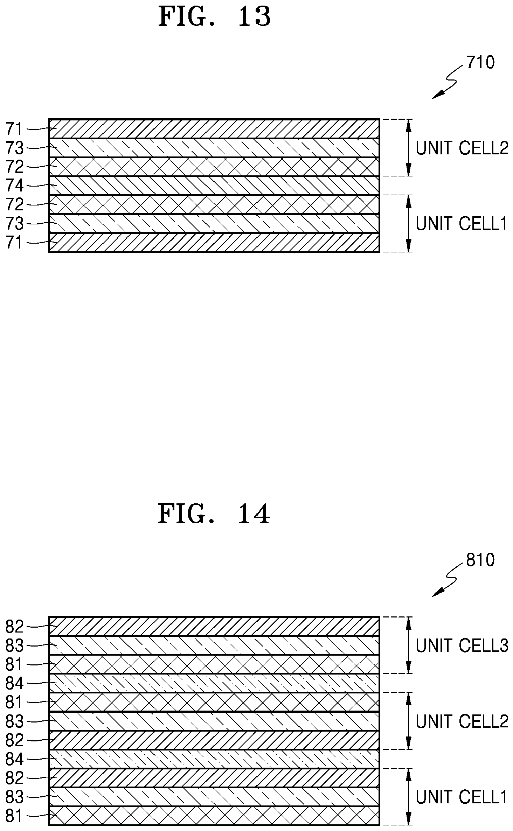

FIGS. 13 and 14 schematically show a cross-sectional structure of a multilayer ceramic battery according to another embodiment. As shown in FIG. 13, in the multilayer ceramic battery 710, a unit cell 1 and a unit cell 2 may be deposited through an internal current collector layer 74. Each of the unit cell 1 and the unit cell 2 may comprise a cathode layer 71, a solid-state electrolyte layer 73, and an anode layer 72, sequentially stacked. The unit cell 1, the unit cell 2, and an inner current collector layer 74 may be stacked such that an anode layer 72 of the unit cell 2 is adjacent to a first side of the internal current collector layer 74 (top surface in FIG. 13) and an anode layer 72 of the unit cell 1 is adjacent to a second side of the internal current collector layer 74 (bottom surface in FIG. 13). The internal current collector layer 74 is illustrated in FIG. 13 as being positioned in contact with the anode layer 72 of each of the unit cell 1 and the unit cell 2, but may also be positioned in contact with the cathode layer 71 of each of the unit cell 1 and the unit cell 2. The internal current collector layer 74 may include an electronically conductive material. The internal current collector layer 74 may further include an ionic conductive material. Further inclusion of the ionic conductive material may improve voltage stabilization characteristics. Since the same polarity is positioned on both sides of the internal current collector layer 74 in a multilayer ceramic battery 710, by inserting the internal current collector layer 74, a monopolar-type multilayer ceramic battery 710 having a plurality of unit cells connected in parallel may be obtained. As a result, a high-capacity multilayer ceramic battery 710 may be obtained. Since in the multilayer ceramic battery 710, the internal current collector layer 74 inserted between the unit cell 1 and the unit cell 2 contains an electron conducting material, two adjacent unit cells may be electrically connected in parallel, and at the same time, the cathode layer 71 or the anode layer 72 in the two adjacent unit cells may be connected in an ion-conducting manner. As a result, electric potentials of adjacent anode layers 71 or cathode layers 72 can be averaged through the internal current collector layer 74, a stable output voltage may be obtained. In addition, the single cells of the multilayer ceramic battery 710 may be electrically connected in parallel without an external current collecting member such as a tab. Accordingly, the multilayer ceramic battery 710 having excellent space efficiency and cost-effectiveness may be obtained. Referring to FIG. 14, a laminate may contain a cathode layer 81, an anode layer 82, a solid-state electrolyte layer 83, and an internal current collector layer 84. Such a laminate may be stacked and thermally compressed to form a multilayer ceramic battery laminate 810. The 81 may comprise a single sheet of a cathode layer sheet, and the anode layer 82 may comprise two sheets of an anode layer sheet.

## SOLID-STATE ELECTROLYTE PREPARATION METHOD

A method of preparing a solid-state electrolyte according to another embodiment may include: mechanochemically contacting a lithium precursor, an M1 precursor, an M2 precursor, and an X1 precursor, at a temperature of about 300 °C or less, wherein the mixture may further optionally include an M3 precursor, an X2 precursor, or a combination thereof, to prepare a compound represented by Formula 1, wherein the compound represented by Formula 1 is amorphous

Formula 1 $\quad Li_{p-q-(\alpha-5)\times r+(\beta-1)\times t}M1_qM2_{1-r}M3^\alpha{}_rX1_{s-t}X2^\beta{}_t$

wherein in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$ and $0<q/s\leq0.02$,
M1 may be a monovalent cation and may be an element of Group 1 or Group 11 of the Periodic Table, or a combination thereof,
M2 may be a pentavalent cation and may be an element Group 5 of the Periodic Table,
M3° may be a cation element having a valency of $\alpha$,
X1 may be a monovalent anion and may be element of Group 17 of the Periodic Table, and
$X2^\beta$ may be an anion having a valency of $\beta$,
to prepare the solid-state electrolyte.

The lithium precursor may be, for example, a salt compound containing lithium. The lithium precursor may be, for example, a halide. The lithium halide may be, for example, LiCl, LiBr, Lil, LiF or a mixture thereof.
The M1 precursor may be, for example, a salt compound containing M1. The M1 precursor may be, for example, a M1 halide. M1 halide may be, for example, $TaCl_5$, $NbCl_3$, $HoCl_2$, $ZrCl_4$, $YCl_4$, or a combination thereof, but is not limited thereto, and any suitable M1 halide available in the art may be used.
The M2 precursor may be, for example, a salt compound containing M2. M2 precursor may be, for example, a M2 halide. M2 halide may be, for example, NaCl, KCl, RbCl, CsCl, AgCl, CuCl, or a combination thereof, but is not limited thereto, and any suitable M2 halide available in the art may be used.
The M3° precursor may be, for example, a salt compound containing M3°. M3° precursor may be, for example, a M3° halide. M3° halide may be, for example, $ScCl_2$, $HoCl_2$, $ZrCl_4$, $HfCl_4$, $TiCl_4$, $CrCl_5$, $CrCl_6$, $MoCl_6$, $WCl_6$, or a combination thereof, but is not limited thereto, and any suitable M3° halide available in the art may be used.
The X1 precursor may be, for example, a salt compound containing X1. X1 precursor may be, for example, a metal halide. The metal halide may be, for example, LiCl, NaCl, or a combination thereof, but is not limited thereto, and any suitable metal halide used in the art may be used. When using a precursor containing X1 as the lithium precursor and/or the M1 precursor, X1 precursor may be omitted.
The X2 precursor may be, for example, a salt compound containing X2. X2 precursor may be, for example, a salt compound containing X2 and lithium. The X2 precursor may be, for example, $Li_2SO_4$, $Li_3PO_4$, LiOH, or a combination thereof, but is not limited thereto, and any suitable material available as an X2 precursor in the art may be used.
The mixture may or may not further include M3 precursor, X2 precursor, or a combination thereof.
For example, the mechanochemically contacting may comprise mechanical milling to initiate a mechanochemical reaction. The mechanical milling may include ball milling, jet milling, and the like, but is not limited thereto, and any suitable method capable of initiating the mechanochemical reaction in the art may be possible. The mechanical milling may be performed dry, for example, in an inert atmosphere for about 10 to about 1,000 hours, about 100 to about 500 hours, or about 200 to about 400 hours. The mechanical milling may be performed dry, for example, at a speed of about 100 rotations per minute (rpm) to about 10,000 rpm, about 200 rpm to about 5,000 rpm, or about 300 rpm to about 1,000 rpm in an ambient atmosphere or an inert atmosphere. The ambient atmosphere may be an atmosphere containing oxygen. The inert atmosphere may be an atmosphere substantially free of oxygen. For example, the inert atmosphere may be an atmosphere containing nitrogen, argon, neon, or a combination thereof. The mechanochemical reaction may be, for example, an exothermic reaction. A reaction in which the lithium precursor, the M1 precursor, the M2 precursor, and the X1 precursor (which may be omitted when the lithium precursor and/or the M1 precursor includes X1) react to form the amorphous solid-state electrolyte represented by Formula 1 may be an exothermic reaction. A temperature of the exothermic reaction may be, for example, about 50 °C to about 300 °C, about 100 °C to about 300 °C, about 100 °C to about 250 °C, about 100 °C to about 200 °C, or about 100 °C to about 150 °C. The mechanical milling may be performed, for example, by a dry method without using solvents. As the mechanical milling is performed by a dry method, post-treatment processes such as solvent removal, may be omitted.

The preparation of the solid-state electrolyte may be performed without additional heating. In the preparation of the solid-state electrolyte, processes such as applying external thermal energy, such as an additional heat-treatment, may not be conducted. By including an additional heat-treatment, the production of the solid-state electrolyte containing the compound represented by Formula 1 may be made more convenient and inexpensive.

Hereinbelow, the present disclosure will be described in greater detail in conjunction with Examples and Comparative Examples, but is not limited to the examples disclosed below.

EXAMPLES

Preparation of Solid-state electrolyte

Example 1

A mixture was prepared by mixing $TaCl_5$, LiCl and NaCl in a stoichiometric molar ratio of 1 :0.97:0.03. The mixture was put into a planetary mill together with zirconia balls and dry milled to prepare an amorphous solid-state electrolyte, $Li_{0.97}Na_{0.03}TaCl_6$.

The dry milling was performed for 240 hours in an ambient atmosphere by repeating a cycle of 15 minutes at 400 rpm and 5 minutes of rest.

The internal temperature of the planetary mill was 300 °C or less during the milling process. The solid-state electrolyte was powder.

Example 2

Amorphous solid-state electrolyte $Li_{0.98}Na_{0.02}TaCl_6$ was prepared following the same process in Example 1, except that the molar ratio of $TaCl_5$, LiCl and NaCl was changed to 1:0.98:0.02.

Example 3

Amorphous solid-state electrolyte $Li_{0.96}Na_{0.04}TaCl_6$ was prepared following the same process in Example 1, except that the molar ratio of $TaCl_5$, LiCl and NaCl was changed to 1:0.96:0.04.

Example 4

Amorphous solid-state electrolyte $Li_{0.95}Na_{0.05}TaCl_6$ was prepared following the same process in Example 1, except that the molar ratio of $TaCl_5$, LiCl and NaCl was changed to 1:0.95:0.05.

Example 5

Amorphous solid-state electrolyte $Li_{0.9}Na_{0.1}TaCl_6$ was prepared following the same process in Example 1, except that the molar ratio of $TaCl_5$, LiCl and NaCl was changed to 1:0.90:0.1.

Example 6

Amorphous solid-state electrolyte $Li_{0.95}Ag_{0.05}TaCl_6$ was prepared following the same process in Example 1, except that AgCl was used instead of NaCl and the molar ratio of $TaCl_5$, LiCl and AgCl was 1:0.95:0.05.

Example 7

Amorphous solid-state electrolyte $Li_{1.07}Na_{0.03}TaCl_{5.95}(PO_4)_{0.05}$ was prepared following the same process as Example 1, except that $Li_3PO_4$ was added and the molar ratio of $TaCl_5$, LiCl, NaCl, and $Li_3PO_4$ was 1:1.07:0.03:0.05.

Example 8

Amorphous solid-state electrolyte $Li_{0.97}Na_{0.03}NbCl_6$ was prepared following the same process as Example 1, except that $NbCl_5$ was used instead of $TaCl_5$.

Example 9

Amorphous solid-state electrolyte $Li_{0.97}Ag_{0.03}Nb_{0.5}Ho_{0.5}Cl_6$ was prepared following the same process as Example 1, except that AgCl was used instead of NaCl, $NbCl_5$, and $HoCl_3$ was used instead of $TaCl_5$, and the molar ratio of $NbCl_5$, $HoCl_3$, LiCl, and AgCl was 0.5:0.5:0.97:0.03.

Comparative Example 1

Solid-state electrolyte $LiTaCl_6$ was prepared following the same process as Example 1, except that NaCl was excluded and the molar ratio of $TaCl_5$ and LiCl was 1:1.

Comparative Example 2

Crystalline solid-state electrolyte $Li_2ZrCl_6$ was prepared following the same process as Example 1, except that NaCl was excluded, $ZrCl_4$ was used instead of $TaCl_5$, and the molar ratio of $ZrCl_4$ and LiCl was 1:2.

Comparative Example 3

Crystalline solid-state electrolyte $Li_3YCl_6$ was prepared following the same process as Example 1, except that NaCl was excluded, $YCl_3$ was used instead of $TaCl_5$, and the molar ratio of $YCl_3$ and LiCl was 1:3.

Comparative Example 4

Amorphous solid-state electrolyte $Li_{0.85}Na_{0.15}TaCl_6$ was prepared following the same process in Example 1, except that the molar ratio of $TaCl_5$, LiCl and NaCl was changed to 1:0.85:0.15.

The crystal structures and compositions of the solid-state electrolytes prepared in Examples 1 to 9 and Comparative Examples 1 to 4 are shown in Table 1.

Table 1

|  | Structure | Composition |
| --- | --- | --- |
| Example 1 | Amorphous | $Li_{0.97}Na_{0.03}TaCl_6$ |
| Example 2 | Amorphous | $Li_{0.98}Na_{0.02}TaCl_6$ |
| Example 3 | Amorphous | $Li_{0.96}Na_{0.04}TaCl_6$ |
| Example 4 | Amorphous | $Li_{0.95}Na_{0.05}TaCl_6$ |
| Example 5 | Amorphous | $Li_{0.9}Na_{0.1}TaCl_6$ |
| Example 6 | Amorphous | $Li_{0.95}Ag_{0.05}TaCl_6$ |
| Example 7 | Amorphous | $Li_{1.07}Na_{0.03}TaCl_{5.95}(PO_4)_{0.05}$ |
| Example 8 | Amorphous | $Li_{0.97}Na_{0.03}NbCl_6$ |
| Example 9 | Amorphous | $Li_{0.97}Ag_{0.03}Nb_{0.5}Ho_{0.5}Cl_6$ |
| Comparative Example 1 | Crystalline | $LiTaCl_6$ |
| Comparative Example 2 | Crystalline | $Li_2ZrCl_6$ |
| Comparative Example 3 | Crystalline | $Li_3YCl_6$ |
| Comparative Example 4 | Amorphous | $Li_{0.85}Na_{0.15}TaCl_6$ |

Example 10: Preparation of Solid-State Secondary Battery

Preparation of Cathode Layer

As cathode active material, $LiNi_{0.9}Co_{0.05}Al_{0.05}O_2$ (NCA) was prepared. As solid-state electrolyte, the halide-based solid-state electrolyte prepared in Example 1 was prepared. As a conducting agent, carbon nanofibers (CNFs) were prepared. A cathode mixture was prepared by mixing the above materials in a weight ratio of cathode active material: solid-state electrolyte: conductive agent = 66:52:1.

Preparation of first solid-state electrolyte powder

The halide-based solid-state electrolyte prepared in Example 1 was used.

Preparation of second solid-state electrolyte powder

Sulfide-based solid-state electrolyte (Mitsui, S33 ($Li_{5.75}PS_{6.75}Cl_{1.25}$)) was purchased and used as is.

Preparation of Anode Layer

A metal lithium foil having a thickness of 20 $\mu$m was prepared as an anode.

Preparation of Solid-State Secondary Battery

In a tubular cell case with an inside diameter of 13 millimeters (mm), a metal lithium foil having a thickness of 20 $\mu$m was disposed as an anode layer, a sulfide-based solid-state electrolyte was disposed as a first solid-state electrolyte layer on the anode layer, the halide-based solid-state electrolyte prepared in Example 1 was placed on the first solid-state electrolyte layer as a second solid-state electrolyte, and the cathode mixture was placed on the second solid-state electrolyte layer and pressed with a torque of 4,000 kilogram·force·centimeters (kgfcm) (= 4 ton·force·centimeters (tonfcm)) using a torque wrench to thereby prepare a solid-state secondary battery.

The thickness of the anode layer was 20 $\mu$m, the thickness of the first solid-state electrolyte layer was 100 $\mu$m, the thickness of the second solid-state electrolyte layer was 50 $\mu$m, and the thickness of the cathode layer was 130 $\mu$m.

Examples 11 to 18

A solid-state secondary battery was prepared following the same process in Example 10, except that instead of the solid-state electrolyte prepared in Example 1, each of the solid-state electrolyte powders prepared in Examples 2 to 9 were used in the cathode layer and the first solid-state electrolyte layer.

Examples 5 to 8

A solid-state secondary battery was prepared following the same process in Example 10, except that instead of the solid-state electrolyte prepared in Example 1, each of the solid-state electrolyte powders prepared in Comparative Examples 1 to 4 were used in the cathode layer and the first solid-state electrolyte layer.

Comparative Example 9

A solid-state secondary battery was prepared following the same process in Example 10, except that instead of the solid-state electrolyte prepared in Example 1, $Li_{5.75}PS_{6.75}Cl_{1.25}$ used in the second solid-state electrolyte layer was used in the cathode layer and the first solid-state electrolyte layer.

Evaluation Example 1: X-Ray Diffraction (XRD) Analysis

XRD spectra were obtained for the electrolytes prepared in Examples 1 to 9 and Comparative Examples 1 to 4, and some of the results thereof are shown in FIG. 1.

The XRD spectra were obtained using X'pert pro (PANalytical) using Cu K$\alpha$ radiation (1.54056 Å).

XRD spectra of the crystalline $LiTaCl_6$, of Comparative Example 1 and the amorphous $Li_{0.97}Na_{0.03}TaCl_6$ solid-state electrolyte prepared in Example 1 are shown.

As shown in FIG. 1, the amorphous $Li_{0.97}Na_{0.03}TaCl_6$ solid-state electrolyte in Example 1 showed no characteristic peaks and was thus confirmed to be amorphous.

Although not shown in the drawings, it was confirmed that the solid-state electrolytes of Examples 2 to 9 were also amorphous.

Referring to FIG. 1, in the XRD spectrum of the $Li_{0.97}Na_{0.03}TaCl_6$ solid-state electrolyte, the ratio (Ib/Ia) of intensity (Ib) of the second peak at a diffraction angle $29.8\pm1.0°2\theta$ and intensity (Ia) of the first peak at a diffraction angle $41.5\pm1.0°2\theta$ was 0.65 or less.

Referring to FIG. 1, in the XRD spectrum of the $Li_{0.97}Na_{0.03}TaCl_6$ solid-state electrolyte, the FWHM (F1) of the third peak at a diffraction angle $30.1\pm1.0°2\theta$ was $4°2\theta$. Although not shown in the drawings, in the XRD spectrum of $LiTaCl_6$ measured under the same conditions, the second FWHM (F2) of the third peak at a diffraction angle $2\theta = 30.1\pm1.0°$ was $0.4°2\theta$. The ratio (F1/F2) of the first FWHM (F1) to the second FWHM (F2) was 5 or greater.

Evaluation Example 2: X-Ray Photoelectron Spectroscopy XPS Analysis

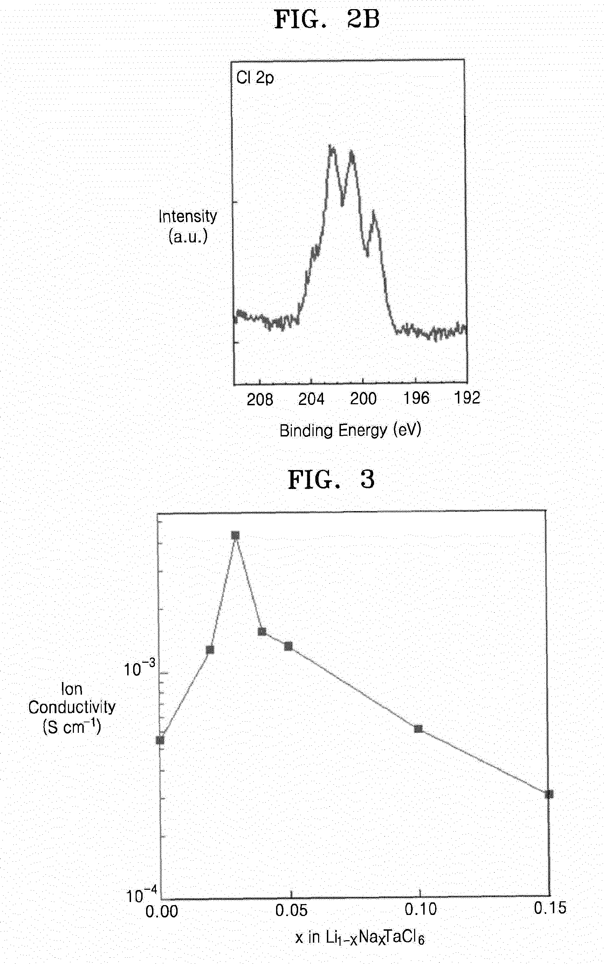

XPS spectra were obtained from the amorphous $Li_{0.97}Na_{0.03}TaCl_6$ solid-state electrolyte of Example 1, and a portion of the results thereof is shown in FIGS. 2A and 2B.

As shown in FIG. 2A and FIG. 2B, the solid-state electrolyte showed a peak originated from Ta 4f orbital and a peak originated from Cl 2p orbital.

It was confirmed that the solid-state electrolyte included Ta and Cl.

Evaluation Example 3: Measurement of Ion conductivity and lithium diffusion barrier

After pulverizing the electrolyte powders prepared in Examples 1 to 9 and Comparative Examples 1 to 4, pellets having a thickness of 1,000 μm were prepared by pressing the pulverized powders with uniaxial pressure. Shielding electrodes were deposited on both sides of the prepared pellets by sputtering platinum (Pt) electrodes to a thickness of 20 nm. Impedance was measured using a 2-probe method using an impedance analyzer (Solartron 1400A/1455A impedance analyzer) for samples having the shielding electrodes formed on both sides thereof. The frequency range was 7 MHz to 1 Hz, and the amplitude voltage was 10 mV. Measurement was made in an ambient atmosphere at 25 °C. Resistance values were obtained from the arc of the Nyquist plot for the impedance measurement results, and ion conductivity was calculated by correcting the electrode surface area and pellet thickness. The results thereof are shown in FIG. 3 and Table 1.

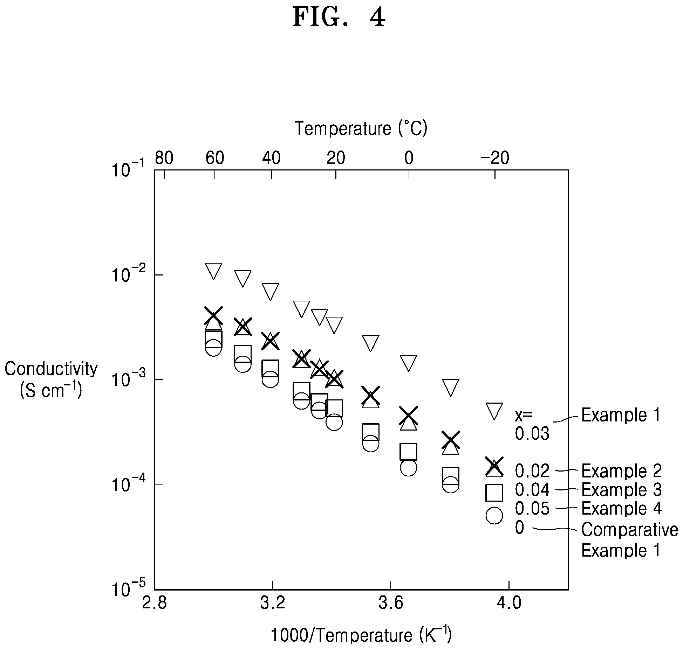

In addition, when measuring impedance, ion conductivity as a function of temperature was measured by varying the temperature of the chamber containing the pellets. By transforming the Arrhenius plot illustrating changes in ion conductivity as a function of temperature, lithium diffusion barrier corresponding to activation energy (Ea) according to Arrhenius equation represented by Equation 1 was calculated from the slope. The results thereof are shown in FIGS. 3 to 4 and Table 2.

## Equation 1

$$\sigma = A\exp(-Ea/kT)$$

In Equation 1, $\sigma$ represents conductivity, A represents frequency factor, Ea represents activation energy, k represents Boltzmann constant, and T represents the absolute temperature.

Table 2

| | Lithium diffusion barrier [meV] | Ion conductivity [S/cm] |
|---|---|---|
| Example 1 | 286 | $4.0\times10^{-3}$ |
| Example 2 | 303 | $1.3\times10^{-3}$ |
| Example 3 | 266 | $1.5\times10^{-3}$ |
| Example 4 | 316 | $1.3\times10^{-3}$ |
| Example 5 | 360 | $5.5\times10^{-4}$ |
| Example 6 | 390 | $1.0\times10^{-3}$ |
| Example 7 | 291 | $2.3\times10^{-3}$ |

(continued)

|  | Lithium diffusion barrier [meV] | Ion conductivity [S/cm] |
|---|---|---|
| Example 8 | 311 | $2.1 \times 10^{-3}$ |
| Example 9 | 385 | $1.1 \times 10^{-3}$ |
| Comparative Example 1 | 330 | $5.0 \times 10^{-4}$ |
| Comparative Example 2 | 310 | $2.8 \times 10^{-4}$ |
| Comparative Example 3 | 343 | $5.0 \times 10^{-4}$ |
| Comparative Example 4 | 402 | $2.5 \times 10^{-4}$ |

As shown in Table 2, the amorphous solid-state electrolytes of Examples 1 to 9 showed improved ion conductivity compared to the solid-state electrolytes of Comparative Examples 1 to 4.

Evaluation Example 4: Measurements of Interfacial resistance and Grain boundary resistance

After charging the solid-state secondary batteries prepared in Example 10 and Comparative Example 6 and 9 up to 100% state of charge (SOC), the impedance of the cathode layer was measured. From the impedance measurements of the solid-state secondary batteries, interfacial resistance components and grain boundary resistance components constituting an equivalent circuit were each calculated. From this, the interfacial resistance ($r_{i/e}$, ohm·cubic centimeter ($\Omega cm^3$)) between the cathode active material and the solid-state electrolyte, and the grain boundary resistance ($r_{i,gb}$, ohm·centimeter ($\Omega cm$)) between solid-state electrolyte particles were calculated, and the results thereof are shown in Table 3.

Impedance was measured by a 2-probe method, using an impedance analyzer (Solartron 1400A/1455A impedance analyzer). The frequency range was 7 megahertz (MHz) to 1 hertz (Hz), and the amplitude voltage was 10 millivolts (mV). The measurements were made at 25 °C.

Table 3

|  | Interfacial resistance ($r_{i/e}$) [$\Omega cm^3$] | Grain boundary resistance ($r_{i,gb}$) [$\Omega cm$] |
|---|---|---|
| Example 10 | 0.028 | 3200 |
| Comparative Example 6 | 0.029 | 5670 |
| Comparative Example 9 | 0.053 | 3235 |

As shown in Table 3, the cathode layer of the solid-state secondary battery of Example 10 showed a significantly reduced grain boundary resistance between solid-state electrolyte particles, compared to the cathode layer of the solid-state secondary battery of Comparative Example 6 containing $Li_2ZrCl_6$.

The cathode layer of the solid-state secondary battery of Example 10 had a significantly decreased interfacial resistance between the cathode active material particles and the solid-state electrolyte particles than the cathode layer of the solid-state secondary battery of Comparative Example 9 containing $Li_{5.75}PS_{6.75}Cl_{1.25}$.

The cell resistance of the solid-state secondary battery of Example 10 was about 10 ohm·square centimeter ($\Omega cm^2$). Meanwhile, the cell resistance of the solid-state secondary batteries of Comparative Example 6 and Comparative Example 9 was each about 14 $\Omega cm^2$.

It was confirmed that the overall internal resistance of the solid-state secondary battery of Example 1 decreased compared to the overall internal resistance of the solid-state secondary batteries of Comparative Example 6 and Comparative Example 9.

Evaluation Example 5: Evaluation of Life-time Characteristics

Lifetime characteristics of the solid-state secondary batteries of Example 10 and Comparative Example 6 were evaluated. Charge-discharge tests were performed at 25 °C.

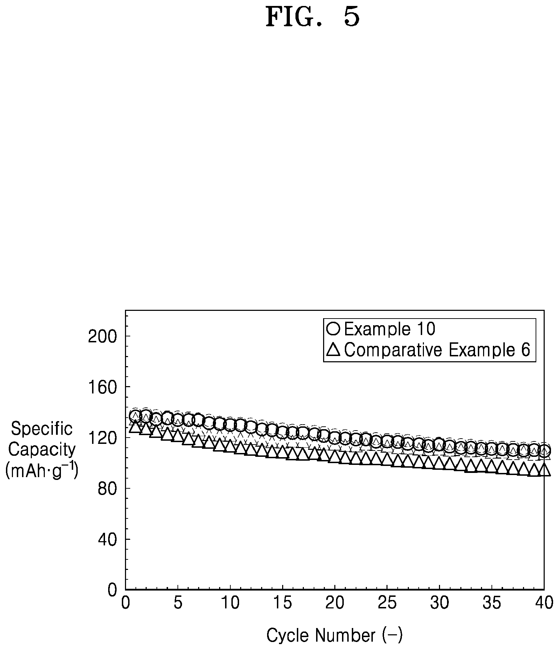

The battery was charged at a constant current rate of 0.1 C until the battery voltage reached 4.2 V, and discharged at a constant current of 0.1 C until the battery voltage reached 2.5 V. This charge-discharge cycle was repeated 40 times. After each cycle, a rest period of 10 minutes was provided after charging and discharging. The C rate is a discharge rate of a cell, and is obtained by dividing a total capacity of the cell by a total discharge period of time of 1 hour, e.g., a C rate for a battery having a discharge capacity of 1.6 ampere-hours would be 1.6 amperes. The total capacity is determined by a discharge capacity on the 1st cycle. 0.1 C or C/10 refers to a current that will fully discharge the battery in 10 hours. The capacity retention of the solid-state secondary batteries prepared in Example 10 and Comparative Example 6 are shown in Table 4 and FIG. 5. Capacity retention was calculated from Equation 2.

Equation 2

Capacity retention (%) = [Discharge capacity at 40th cycle/Discharge capacity at 1st cycle]×100%

Table 4

|  | Capacity retention [%] |
|---|---|
| Example 10 | 98 |
| Comparative Example 6 | 91 |

As shown in Table 4 and FIG. 5, the solid-state secondary battery of Example 10, due to having a reduced internal resistance compared to the solid-state secondary battery of Comparative Example 6, was found to have improved lifetime characteristics at room temperature.

Although an embodiment has been described above, the present disclosure is not limited thereto. Various modifications may be implemented within the scope of the claims and the accompanied drawings, and such modifications should be construed as falling within the scope of the present disclosure.

According to an aspect of the disclosure, a novel solid-state electrolyte having improved ion conductivity and a lithium battery including the solid-state electrolyte may be provided.

The novel solid-state electrolyte may have no harmful gas generation and may be prepared at a relatively lower temperature, and due to having a wider potential window and an increased mechanical ductility compared to a sulfide-based solid-state electrolyte, may be suitable as an electrolyte of a lithium battery.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A solid-state electrolyte, comprising:

a compound represented by Formula 1

Formula 1     $Li_{p-q-(\alpha-5)\times r+(\beta-1)\times t}M1_q M2_{1-r}M3^{\alpha}_r X1_{s-t}X2^{\beta}_t$

wherein in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$, and $0< q/s \leq 0.02$,
M1 is a monovalent cation and is an element of Group 1 or Group 11 of the Periodic Table, or a combination thereof,
M2 is a pentavalent cation and is at least one element of Group 5 of the Periodic Table,
M3 is a cation element having a valency of $\alpha$,
X1 is a monovalent anion and is at least one element of Group 17 of the Periodic Table, and
X2 is an anion having a valency of $\beta$, and
wherein the compound is amorphous.

**2.** The solid-state electrolyte of claim 1, wherein a structure of the compound represented by Formula 1 comprises a Li site, an M2 site, and an X1 site, which are three-dimensionally arranged, wherein the Li site comprises M1 disposed therein; and/or

wherein M1 comprises Na, K, Rb, Cs, Ag, Cu, or a combination thereof; and/or
wherein M2 comprises Ta, V, Nb, or a combination thereof.

**3.** The solid-state electrolyte of claims 1 or 2, wherein a structure of the compound represented by Formula 1 comprises a Li site, an M2 site, and an X1 site, which are three-dimensionally arranged, wherein the M2 site comprises M3 disposed therein.

**4.** The solid-state electrolyte of any of claims 1-3, wherein

M3 is a divalent cation element, and M3 comprises Be, Mg, Ca, Sr, Ba, Zn, Cu, Ni, Co, Fe, Mn, Cr, V, or a combination thereof;
M3 is a trivalent cation element, and M3 comprises Sc, Ho, Lu, Yb, Tb, Tm, Er, Dy, Er, In, Ga, Sm, Gd, B, Al, Ga, In, Y, La, Ce, Pr, Nd, or a combination thereof;
M3 is a tetravalent cation element, and M3 comprises Zr, Hf, Ti, Ce, Si, Sn, Ge, Pb, or a combination thereof;
M3 is a pentavalent cation element, and M3 comprises Cr, Mn, Fe, Co, or a combination thereof; or
M3 is a hexavalent cation element, and M3 comprises Cr, Mo, W, Mn, or a combination thereof.

**5.** The solid-state electrolyte of any of claims 1-4, wherein X1 comprises Cl, Br, F, I, or a combination thereof; and/or wherein a structure of the compound represented by Formula 1 comprises a Li site, an M2 site, and an X1 site, which are three-dimensionally arranged, wherein the X1 site comprises X2 disposed therein.

**6.** The solid-state electrolyte of any of claims 1-5, wherein
X2 is a monovalent anion, and X2 comprises $BH_4$, $NO_2$, $NO_3$, $CN$, $ClO_3$, or a combination thereof;

X2 is a divalent anion, and X2 comprises $SO_4$, $SO_3$, $CO_3$, or a combination thereof; or
X2 is a trivalent anion, and X2 comprises $PO_4$, $BO_3$, $AsO_4$, P, N, or a combination thereof.

**7.** The solid-state electrolyte of any of claims 1-6, wherein the compound represented by Formula 1 is a compound represented by Formula 2

Formula 2 $\quad\quad Li_{p-q-(\alpha-5)\times r+(\beta-1)\times t}M1_qM2_{1-r}M3^\alpha_rCl_{s-t}X2^\beta_t$

wherein in Formula 2, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 is Na, K, Rb, Cs, Ag, Cu, or a combination thereof,
M2 is Ta, V, Nb, or a combination thereof,
M3 is Sc, Ho, Lu, Yb, Tm, Er, Dy, In, Ga, Sm, Gd, B, Al, Ga, In, Y, La, Ce, Pr, Nd, or a combination thereof, and
X2 is a monovalent anion, a divalent anion, a trivalent anion, or a combination thereof.

**8.** The solid-state electrolyte of any of claims 1-7, wherein the compound represented by Formula 1 is a compound represented by Formulas 3 to 5

Formula 3 $\quad\quad Li_{p-q-(\alpha-5)\times r+(\beta-1)\times t}M1_qTa_{1-r}M3^\alpha_rCl_{s-t}X2^\beta_t$

wherein in Formula 3, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 is Na, K, Rb, Cs, Ag, Cu, or a combination thereof,
M3 is Sc, Ho, Lu, Yb, Tm, Er, Dy, In, Ga, Sm, Gd, B, Al, Ga, In, Y, La, Ce, Pr, Nd, or a combination thereof,
X2 is $BH_4$, $NO_2$, $NO_3$, $CN$, $ClO_3$, $SO_4$, $SO_3$, $CO_3$, $PO_4$, $BO_3$, $AsO_4$, P, N, or a combination thereof;

Formula 4 $\quad\quad Li_{p-q-(\alpha-5)\times r+(\beta-1)\times t}M1_qNb_{1-r}M3^\alpha_rCl_{s-t}X2^\beta_t$

wherein in Formula 4, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 is Na, K, Rb, Cs, Ag, Cu, or a combination thereof,
M3 is Sc, Ho, Lu, Yb, Tm, Er, Dy, In, Ga, Sm, Gd, B, Al, Ga, In, Y, La, Ce, Pr, Nd, or a combination thereof, and
X2 is $BH_4$, $NO_2$, $NO_3$, $CN$, $ClO_3$, $SO_4$, $SO_3$, $CO_3$, $PO_4$, $BO_3$, $AsO_4$, P, N, or a combination thereof;

Formula 5 $Li_{p-q-(\alpha-5)\times r+(\beta-1)\times t}M1_qV_{1-r}M3^\alpha_rCl_{s-t}X2^\beta_t$

wherein in Formula 5, $0<p\leq7$, $0<q\leq0.24$, $0\leq r\leq0.5$, $1<s\leq12$, $0\leq t\leq1$, $0<q+(\alpha-5)\times r-(\beta-1)\times t$, and $0< q/s \leq 0.02$,
M1 is Na, K, Rb, Cs, Ag, Cu, or a combination thereof,
M3 is Sc, Ho, Lu, Yb, Tm, Er, Dy, In, Ga, Sm, Gd, B, Al, Ga, In, Y, La, Ce, Pr, Nd, or a combination thereof, and
X2 is $BH_4$, $NO_2$, $NO_3$, CN, $ClO_3$, $SO_4$, $SO_3$, $CO_3$, $PO_4$, $BO_3$, $AsO_4$, P, N, or a combination thereof.

9. The solid-state electrolyte of any of claims 1-8, wherein an ionic radius of M1 in Formula 1 is greater than an ionic radius of Li, and
in Formula 1, ionic radii of X1 and X2 are each independently 125 picometers or greater.

10. The solid-state electrolyte of any of claims 1-9,

wherein the solid-state electrolyte has a first peak at a diffraction angle of $41.5\pm1.0°2\theta$ and a second peak at a diffraction angle of $29.8\pm1.0°2\theta$, when analyzed by an X-ray diffraction using $CuK\alpha$ radiation, and
wherein a ratio of an intensity of the second peak to an intensity of the first peak is 3 or less.

11. The solid-state electrolyte of any of claims 1-10, wherein a first full width at half maximum of a third peak of the solid-state electrolyte at a diffraction angle of $30.1\pm1.0°2\theta$ in an X-ray diffraction spectrum of the solid-state electrolyte is greater than a second full width at half maximum of a third peak of a crystalline $LiTaCl_6$ at a diffraction angle of $30.1\pm1.0°2\theta$ in an X-ray diffraction spectrum of the crystalline $LiTaCl_6$, when measured under a same condition as the solid-state electrolyte and using $CuK\alpha$ radiation, and
a ratio of the first full width at half maximum to the second full width at half maximum is 5 or greater.

12. The solid-state electrolyte of any of claims 1-11, wherein the compound represented by Formula 1 has an ion conductivity of $1\times10^{-3}$ Siemens per centimeter or greater at 25 °C, and the solid-state electrolyte has a lithium diffusion barrier of 400 millielectronvolts or less; and/or
wherein the solid-state electrolyte is electrochemically stable with respect to lithium metal, in a potential window of 0.6 volt to 4.2 volts.

13. A lithium battery comprising:

a cathode layer;
an anode layer; and
an electrolyte layer between the cathode layer and the anode layer,
wherein the cathode layer, the electrolyte layer, or a combination thereof, comprises the solid-state electrolyte according to any of claims 1-12.

14. The lithium battery of claim 13, wherein the electrolyte layer comprises a first electrolyte layer adjacent to the cathode layer, and a second electrolyte layer between the first electrolyte layer and the anode layer, and the first electrolyte layer comprises the solid-state electrolyte; and/or
wherein the lithium battery is a lithium ion battery, a solid-state battery, or a multilayer ceramic battery.

15. A method of preparing a solid-state electrolyte, the method comprising:

mechanochemically contacting a lithium precursor, an M1 precursor, an M2 precursor, and an X1 precursor, at a temperature of 300 °C or less,
wherein the mixture optionally further comprises an M3 precursor, an X2 precursor, or a combination thereof,
to prepare a compound represented by Formula 1, wherein the compound represented by Formula 1 is amorphous

Formula 1 $Li_{p-q-(\alpha-5)\times r+(\beta-1)\times t}M1_qM2_{1-r}M3^\alpha_rX_{s-t}X2^\beta_t$

wherein, in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$ and $0< q/s \leq 0.02$,
M1 is a monovalent cation and is an element of Group 1 or Group 11 of the Periodic Table, or a combination thereof,
M2 is a pentavalent cation and is at least one element of Group 5 of the Periodic Table,

M3 is a cation element having a valency of $\alpha$,

X1 is a monovalent anion and is at least one element of Group 17 of the Periodic Table, and

X2 is an anion having a valency of $\beta$,

to prepare the solid-state electrolyte.

**Amended claims in accordance with Rule 137(2) EPC.**

1. A solid-state electrolyte, comprising:

   a compound represented by Formula 1

   $$\text{Formula 1} \qquad Li_{p-q-(\alpha-5)\times r+(\beta-1)\times t}M1_q M2_{1-r}M3^{\alpha}{}_r X1_{s-t}X2^{\beta}{}_t$$

   wherein in Formula 1, $0<p\leq7$, $0<q\leq0.24$, $0\leq r\leq0.5$, $1<s\leq12$, $0\leq t\leq1$, $0<p-q-(\alpha-5)\times r+(\beta-1)\times t$, and $0< q/s \leq 0.02$,

   M1 is Na, K, Rb, Cs, Ag, Cu, or a combination thereof,

   M2 is Ta, V, Nb, or a combination thereof,

   M3 is Sc, Ho, Lu, Yb, Tm, Er, Dy, In, Ga, Sm, Gd, B, Al, Ga, In, Y, La, Ce, Pr, Nd, or a combination thereof,

   X1 comprises Cl, Br, F, I, or a combination thereof, and

   X2 is $BH_4$, $NO_2$, $NO_3$, CN, $ClO_3$, $SO_4$, $SO_3$, $CO_3$, $PO_4$, $BO_3$, $AsO_4$, P, N, or a combination thereof, and

   wherein the compound is amorphous.

2. The solid-state electrolyte of claim 1, wherein a structure of the compound represented by Formula 1 comprises a Li site, an M2 site, and an X1 site, which are three-dimensionally arranged, wherein the Li site comprises M1 disposed therein.

3. The solid-state electrolyte of claims 1 or 2, wherein a structure of the compound represented by Formula 1 comprises a Li site, an M2 site, and an X1 site, which are three-dimensionally arranged, wherein the M2 site comprises M3 disposed therein.

4. The solid-state electrolyte of any of claims 1-3,
   wherein a structure of the compound represented by Formula 1 comprises a Li site, an M2 site, and an X1 site, which are three-dimensionally arranged, wherein the X1 site comprises X2 disposed therein.

5. The solid-state electrolyte of any of claims 1-4, wherein X1 is Cl and M2 is Ta.

6. The solid-state electrolyte of any of claims 1-5, wherein an ionic radius of M1 in Formula 1 is greater than an ionic radius of Li, and
   in Formula 1, ionic radii of X1 and X2 are each independently 125 picometers or greater.

7. The solid-state electrolyte of any of claims 1-6, wherein the compound represented by Formula 1 has an ion conductivity of $1\times10^{-3}$ Siemens per centimeter or greater at 25 °C, and the solid-state electrolyte has a lithium diffusion barrier of 400 millielectronvolts or less; wherein the lithium diffusion barrier is determined according to the method of the description; and/or
   wherein the solid-state electrolyte is electrochemically stable with respect to lithium metal, in a potential window of 0.6 volt to 4.2 volts.

8. A lithium battery comprising:

   a cathode layer;
   an anode layer; and
   an electrolyte layer between the cathode layer and the anode layer,
   wherein the cathode layer, the electrolyte layer, or a combination thereof, comprises the solid-state electrolyte according to any of claims 1-7.

9. The lithium battery of claim 8, wherein the electrolyte layer comprises a first electrolyte layer adjacent to the cathode layer, and a second electrolyte layer between the first electrolyte layer and the anode layer, and the first electrolyte layer comprises the solid-state electrolyte; and/or
   wherein the lithium battery is a lithium ion battery, a solid-state battery, or a multilayer ceramic battery.

10. A method of preparing a solid-state electrolyte, the method comprising:

mechanochemically contacting a lithium precursor, an M1 precursor, an M2 precursor, and an X1 precursor, at a temperature of 300 °C or less,
wherein the mixture optionally further comprises an M3 precursor, an X2 precursor, or a combination thereof, to prepare a compound represented by Formula 1, wherein the compound represented by Formula 1 is amorphous

$$\text{Formula 1} \qquad \text{Li}_{p-q-(\alpha-5)\times r+(\beta-1)\times t}\text{M1}_q\text{M2}_{1-r}\text{M3}^{\alpha}_{r}\text{X1}_{s-t}\text{X2}^{\beta}_{t}$$

wherein, in Formula 1, $0<p\leq 7$, $0<q\leq 0.24$, $0\leq r\leq 0.5$, $1<s\leq 12$, $0\leq t\leq 1$, $0<p-q-(\alpha-5)\times r+(\beta-1)\times t$ and $0< q/s \leq 0.02$,
M1 is Na, K, Rb, Cs, Ag, Cu, or a combination thereof,
M2 is Ta, V, Nb, or a combination thereof,
M3 is Sc, Ho, Lu, Yb, Tm, Er, Dy, In, Ga, Sm, Gd, B, Al, Ga, In, Y, La, Ce, Pr, Nd, or a combination thereof,
X1 comprises Cl, Br, F, I, or a combination thereof,
X2 is $BH_4$, $NO_2$, $NO_3$, CN, $ClO_3$, $SO_4$, $SO_3$, $CO_3$, $PO_4$, $BO_3$, $AsO_4$, P, N, or a combination thereof,
to prepare the solid-state electrolyte.

# FIG. 1

Intensity (a.u.)

diffraction angle (°2θ)

# FIG. 2A

Ta 4f

Intensity (a.u.)

Binding Energy (eV)

## FIG. 2B

Cl 2p

Intensity (a.u.)

208    204    200    196    192

Binding Energy (eV)

## FIG. 3

Ion Conductivity (S cm$^{-1}$)

$10^{-3}$

$10^{-4}$

0.00    0.05    0.10    0.15

x in $Li_{1-x}Na_xTaCl_6$

# FIG. 4

# FIG. 5

# FIG. 6

# FIG. 7

# FIG. 8

1

4
2
4
3

7

5

8

# FIG. 9

# FIG. 10

# FIG. 11

# FIG. 12

# FIG. 13

710

| | UNIT CELL2 |
71
73
72
74
72
73
71

UNIT CELL1

# FIG. 14

810

82
83
81
84
81
83
82
84
82
83
81

UNIT CELL3

UNIT CELL2

UNIT CELL1

Europäisches
Patentamt

European
Patent Office

Office européen
des brevets

# EUROPEAN SEARCH REPORT

Application Number

EP 23 16 4924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 792 839 A (UNIV SCIENCE & TECHNOLOGY CHINA ET AL.) 26 July 2022 (2022-07-26) * examples T1, T4, T5 * * table 1 * * claim 10 * * paragraph [0005] * * p. 7 paragraphs 6-8 * | 1-15 | INV. H01M10/0562 H01M4/62 H01M10/052 H01M10/0525 C04B35/515 |
| A | US 2021/098824 A1 (NISHIO YUSUKE [JP] ET AL) 1 April 2021 (2021-04-01) * paragraph [0013] * * table 1 * | 1-15 | |
| A | EP 3 736 824 A1 (PANASONIC IP MAN CO LTD [JP]) 11 November 2020 (2020-11-11) * claim 1 * * table 1 * | 1-15 | |
| A | EP 3 736 834 A1 (PANASONIC IP MAN CO LTD [JP]) 11 November 2020 (2020-11-11) * claim 1 * | 1-15 | TECHNICAL FIELDS SEARCHED (IPC) H01M |

The present search report has been drawn up for all claims

| Place of search | Date of completion of the search | Examiner |
|---|---|---|
| Munich | 5 September 2023 | Gregori, Giuliano |

EPO FORM 1503 03.82 (P04C01)

**ANNEX TO THE EUROPEAN SEARCH REPORT
ON EUROPEAN PATENT APPLICATION NO.**

EP 23 16 4924

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| CN 114792839 | A | 26-07-2022 | NONE | | |
| US 2021098824 | A1 | 01-04-2021 | CN | 112189239 A | 05-01-2021 |
| | | | EP | 3863026 A1 | 11-08-2021 |
| | | | JP | WO2020070958 A1 | 02-09-2021 |
| | | | US | 2021098824 A1 | 01-04-2021 |
| | | | WO | 2020070958 A1 | 09-04-2020 |
| EP 3736824 | A1 | 11-11-2020 | CN | 111279430 A | 12-06-2020 |
| | | | EP | 3736824 A1 | 11-11-2020 |
| | | | JP | 2023106424 A | 01-08-2023 |
| | | | JP | WO2019135336 A1 | 07-01-2021 |
| | | | US | 2020328466 A1 | 15-10-2020 |
| | | | WO | 2019135336 A1 | 11-07-2019 |
| EP 3736834 | A1 | 11-11-2020 | CN | 111344811 A | 26-06-2020 |
| | | | EP | 3736834 A1 | 11-11-2020 |
| | | | JP | 7253706 B2 | 07-04-2023 |
| | | | JP | WO2019135343 A1 | 07-01-2021 |
| | | | US | 2020328460 A1 | 15-10-2020 |
| | | | WO | 2019135343 A1 | 11-07-2019 |

EPO FORM P0459

For more details about this annex : see Official Journal of the European Patent Office, No. 12/82